# EUROPEAN PATENT APPLICATION

(11) **EP 1 783 806 A1**
(43) Date of publication of application: **09.05.2007**
(21) Application number: 05774847.7
(22) Date of filing: 23.08.2005
(51) Int. Cl.: H01J 29/86, H01J 31/12, H01J 9/26, C03C 27/06, C09K 3/10

(54) **ENVELOPE FOR IMAGE DISPLAY, SEALING MATERIAL, SEALING METHOD, AND IMAGE DISPLAY**

(30) Priority: 23.08.2004 JP 2004241895; 18.03.2005 JP 2005079072
(71) Applicant: Asahi Glass Company, Limited, Chiyoda-ku, Tokyo 100-8405 (JP); Mitsui Chemicals, Inc., Tokyo 105-7117 (JP)
(72) Inventor: MIZUTA, Yasushi, Chiba 2990265 (JP); YAMAZAKI, Akihiro, Chiba 2990265 (JP); ITOU, Yuichi, Chiba 2990265 (JP); KUROKI, Yuichi, Yokohama-shi, Kanagawa 2218755 (JP); ISHIZEKI, Kenji, Yokohama-shi, Kanagawa 2218755 (JP)
(74) Representative: Müller-Boré & Partner Patentanwälte
(86) International application number: PCT/JP2005/015283
(87) International publication number: WO 2006/022265

(57) **Abstract**

To provide an envelope for an image display device, a hermetic sealing material and a sealing method, with which sealing is possible at a temperature less than 400°C, sufficient strength is achieved in a high temperature environment, and characteristics will not decrease under high humidity conditions including a high temperature and high humidity atmosphere.

An envelope for an image display device, having envelope-constituting members including an image display portion made of glass, sealed with a hermetic sealing material layer, wherein the hermetic sealing material layer includes an organic hermetic sealing material layer obtained by firing an organic hermetic sealing material preferably including a primer layer, a fired body of the organic hermetic sealing material has a viscosity of at least 10⁵ Pa·s within a range of from 200 to 350°C, and preferably the flexural strength after the fired body is left at rest in a constant temperature and constant humidity atmosphere at a temperature of 80°C in a humidity of 85% for 7 days is at least 90% of the flexural strength before the still standing.

## Description

### TECHNICAL FIELD

The present invention relates to an envelope for an image display device such as a television-broadcasting receiver, a monitor equipment, etc. in a screen picture equipment, a hermetic sealing material, a sealing method and an image display device.

### BACKGROUND ART

Usually, a cathode ray tube (CRT), an image display device having a field emission cold cathode (FED) and a plasma display (PDP) (hereinafter they will be generically referred to as an image display device) comprise two or more members. Specifically, a CRT comprises an image display panel portion (glass panel portion) on which an image is produced and a glass funnel portion having an electron gun, and a FED typically comprises a front panel portion (image display panel portion), a rear panel portion having a cold cathode disposed to face the front panel portion, and an exterior frame present between the front panel portion and the rear panel portion and occluding the periphery. These image display devices are produced by sealing such members, to form an envelope.

Heretofore, the sealing is carried out by forming frit glass into a slurry as disclosed in Patent Document 1, which is applied to edge surfaces and dried at a relatively low temperature and then fired at a higher temperature, or by mixing them to form a sheet, which is attached to edge surfaces and fired. As the frit glass, a PbO-B₂O₃-ZnO-SiO₂ type crystalline low melting solder glass having a high lead content has been used.

The envelope after sealing is exhausted at a high temperature of from about 250 to about 380°C so that the interior thereof is in a high vacuum. In this occasion, a tensile strain induced by using atmospheric pressure and a tensile thermal stress resulting from a difference between internal temperature and outer temperature are applied to the sealed portion, and accordingly strength resistant to such stresses is required.

Further, in order to secure long term reliability of the image display device, the sealed portion is required to have a hydrostatic pressure of at least 0.3 MPa and high airtightness and insulating characteristics.

In recent years, a CRT becomes large and flat, and accordingly a very small deformation of a built-in metal member such as a shadow mask causes displacement of an electron beam and impairs the image. Accordingly, heat deformation of a metal in a sealing process which had not been problematic before has attracted attention, and reduction of the sealing temperature has been desired. It has been found that such heat deformation is almost suppressed by decreasing the sealing temperature to lower than 400°C.

Further, in the case of a FED, a back substrate disposed in the envelope has a multilayer structure comprising a cathode electrode, a resister layer, an emitter, an insulating layer and the like, and it is desired to carry out a heat treatment at a temperature as low as possible, in view of a difference in thermal expansion characteristics among the respective layers. Further, depending upon the type of the emitter, the emitter may be oxidized at a sealing temperature higher than 400°C, thus deteriorating the electron emission characteristics. Accordingly, a sealing material with which sealing can be carried out at a temperature lower than 400°C has been desired.

However, in sealing by using frit glass, a firing temperature of at least 400°C is required, and if sealing is carried out at a firing temperature lower than 400°C, strength at the sealed portion is insufficient, and the sealed portion may be broken in the subsequent high temperature exhaust process, or long term reliability of the envelope may not be secured. Further, the frit glass contains lead in an amount of 60 mass% or more, but, in view of influences over environment, the frit glass is required to be free from lead.

As a hermetic sealing material with which sealing can be carried out at a temperature lower than 400°C and which contains no lead, hermetic sealing materials such as an epoxy resin and a silicone resin are disclosed in Patent Documents 1 and 2. However, such conventional hermetic sealing materials have such drawbacks that (1) the adhesive strength with glass is insufficient, (2) strength is insufficient at a high temperature, (3) the hermetic sealing material itself decomposes at the time of high temperature exhaustion, generates a gas and impairs an electron gun or a cold cathode, and (4) the gas permeability is high, and no high vacuum can be maintained. As examples of other organic hermetic sealing materials, adhesives containing a polybenzimidazole resin, a polyimide resin or a polyphenyl compound are disclosed in Patent Documents 3 to 6. However, these hermetic sealing materials do not sufficiently overcome the above problems (1) to (4).
Patent Document 1: JP-A-52-124854
Patent Document 2: JP-A-4-245153
Patent Document 3: JP-A-2000-21298
Patent Document 4: JP-A-2000-251768
Patent Document 5: JP-A-2000-251769
Patent Document 6: JP-A-10-275573

### DISCLOSURE OF THE INVENTION

### OBJECTS TO BE ACCOMPLISHED BY THE INVENTION

It is an object of the present invention to provide an envelope for an image display device wherein a sealed portion has sufficient strength against atmospheric pressure and a thermal stress generated in a process for producing an image display device, whereby the sealed portion will not be broken in the production process, and further, a decrease in properties during use under high humidity conditions including a high temperature and humid atmosphere, is suppressed, whereby practical durability is improved.

Such an envelope for an image display device is preferably such that a sealed portion has a sufficient dielectric breakdown strength and that the sealed portion is free from lead.

Further, it is also an object of the present invention to provide a hermetic sealing material for an image display device, with which sealing can be carried out at a temperature lower than 400°C, and a fired body of which has a sufficient strength in a high temperature environment which it undergoes in a process for producing an image display device.

Such a hermetic sealing material is preferably such that the fired body thereof does not substantially decompose in a high temperature environment which it undergoes in the process for producing an image display device, and thus it generates no cracked gas. Further, such a hermetic sealing material is preferably excellent in handling efficiency in a high temperature environment which it undergoes in the process for producing an image display device.

Still further, it is also an object of the present invention to provide an image display device which is free from a problem of breakage of a sealed portion in a production process and which is excellent in display characteristics.

### MEANS TO ACCOMPLISH THE OBJECTS

The present invention has been made to accomplish the above objects, and the present invention provides the following.
1. An envelope for an image display device, having envelope-constituting members including an image display portion made of glass, sealed with a hermetic sealing material layer, characterized in that the hermetic sealing material layer comprises an organic hermetic sealing material layer obtained by firing an organic hermetic sealing material, and a fired body of the organic hermetic sealing material has a viscosity of at least 10⁵ Pa·s within a range of from 200 to 350°C.
2. The envelope for an image display device according to the above 1, wherein a sealed portion comprising the organic hermetic sealing material layer and the envelope-constituting members sealed with the organic hermetic sealing material layer, has a flexural strength of at least 30 MPa at 220°C.
3. The envelope for an image display device according to the above 1 or 2, wherein the fired body of the organic hermetic sealing material has a glass transition temperature (Tg) of at least 200°C as measured by a differential scanning calorimeter.
4. The envelope for an image display device according to any one of the above 1 to 3, wherein the fired body of the organic hermetic sealing material has a flexural modulus of at least 300 MPa at 220°C.
5. The envelope for an image display device according to any one of the above 1 to 4, wherein the fired body of the organic hermetic sealing material satisfies 0.99<m₄₀₀/m₂₀≦1.00, where m₂₀ is the mass at 20°C, and m₄₀₀ is the mass at 400°C.
6. The envelope for an image display device according to any one of the above 1 to 5, wherein the main component of the organic hermetic sealing material is a polyimide compound or a polyamic acid compound.
7. An envelope for an image display device, characterized in that a sealed portion of envelope-constituting members including an image display portion made of glass is sealed with a hermetic sealing material layer containing a polyimide compound and/or a polyamic acid compound as the main component, and the flexural strength after the sealed portion is left at rest in a constant temperature and constant humidity atmosphere at a temperature of 80°C in a humidity of 85% for 7 days, is at least 90% of the flexural strength before the still standing.
8. The envelope for an image display device according to the above 7, characterized in that the sealed portion is sealed with a primer layer containing a fired body of an organic metal compound and/or its hydrolysate, on at least one side of the hermetic sealing material layer.
9. The envelope for an image display device according to the above 8, wherein the organic metal compound is a compound represented by the following Formula (A):

   R²ₙMR¹₍₄₋ₙ₎ (A)

   (in the Formula, M is at least one element selected from the group consisting of Si, Ti and Zr, R¹ is a hydrolysable group, R² is a C₁₋₄ alkyl group or a phenyl group, and n is an integer of from 0 to 2).
10. The envelope for an image display device according to any one of the above 7 to 9, wherein the hermetic sealing material layer is a layer containing, as the main component, a hydrolysate of a polyimide compound and/or a polyamic acid compound containing a structure represented by the following Formula (B):

   -Si-(OR⁴)₃₋ᵣR⁵ᵣ (B)

   (in the Formula, R⁴ is a C₁₋₃ alkyl group, R⁵ is a C₁₋₃ alkyl group or a phenyl group, and r is 0 to 2).
11. The envelope for an image display device according to any one of the above 7 to 10, wherein the envelope is a vacuum envelope.
12. A hermetic sealing material for an image display device, which is an organic hermetic sealing material to seal envelope-constituting members to constitute an envelope for an image display device, characterized in that a fired body thereof has a viscosity of at least 10⁵ Pa·s within a range of from 200 to 350°C.
13. The hermetic sealing material for an image display device according to the above 12, wherein the minimum viscosity before firing is at most 10³ Pa·s within a range of from 200 to 400°C.
14. The hermetic sealing material for an image display device according to the above 12 or 13, wherein the fired body has a glass transition temperature (Tg) of at least 200°C as measured by a differential scanning calorimeter.
15. The hermetic sealing material for an image display device according to any one of the above 12 to 14, wherein the fired body has a flexural modulus of at least 300 MPa at 220°C.
16. The hermetic sealing material for an image display device according to any one of the above 12 to 15, wherein 0.99<m₄₀₀/m₂₀≦1.00, where m₂₀ is the mass of the fired body at 20°C, and m₄₀₀ is the mass of the fired body at 400°C.
17. The hermetic sealing material for an image display device according to any one of the above 12 to 16, which contains, as the main component, a polyimide compound or a polyamic acid compound.
18. The hermetic sealing material for an image display device according to the above 17, characterized by containing, as the main component, at least one of polyimide compounds having structures represented by the following Formulae 1 to 3: 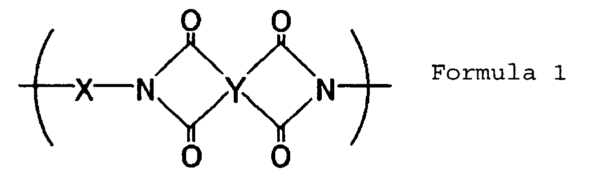 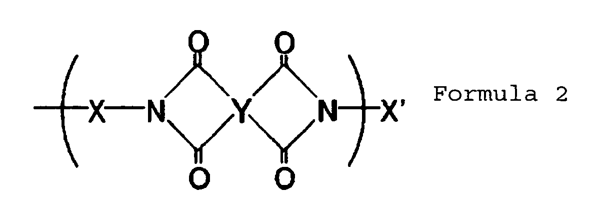 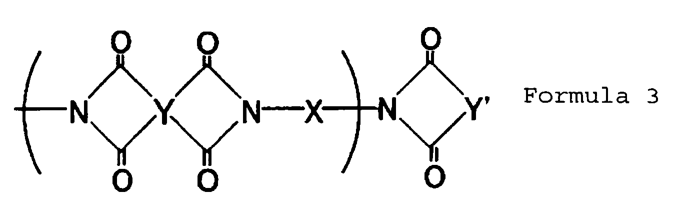 (in the Formulae, X is the main skeleton of a diamine compound, X' is the main skeleton of a monoamine compound, Y is the main skeleton of a tetracarboxylic dianhydride, and Y' is the main skeleton of a dicarboxylic anhydride).
19. The hermetic sealing material for an image display device according to the above 18, characterized in that in the polyimide compounds of the Formulae 1 to 3, when X is any one selected from the group consisting of the following Formulae 4 to 8, Y is any one selected from the group consisting of the following Formulae 9 to 14; when X is the following Formula 15, Y is the following Formula 16 or 17; and when X is the following Formula 18, Y is the following Formula 19: 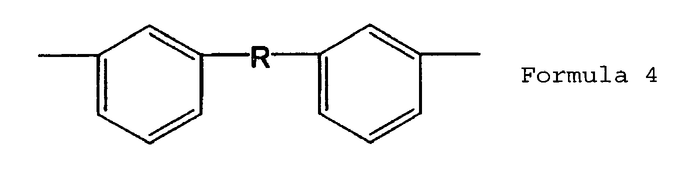 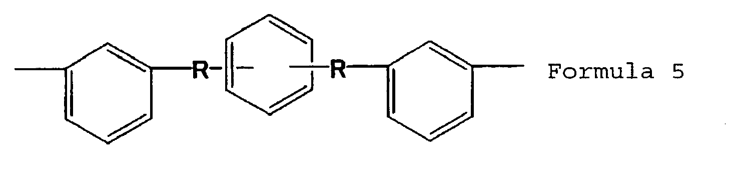 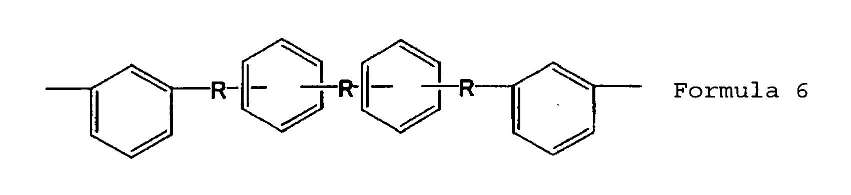 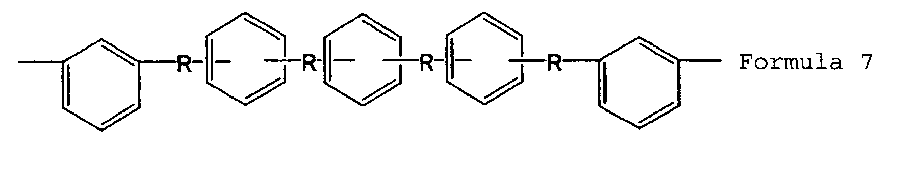 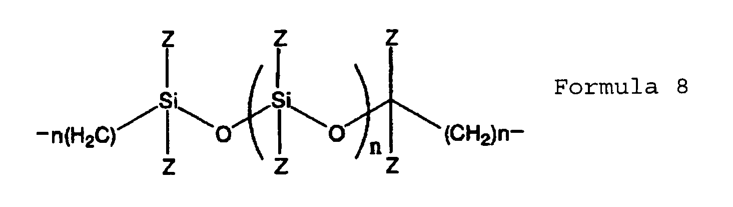 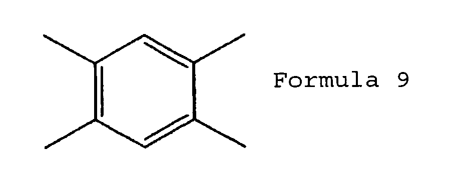 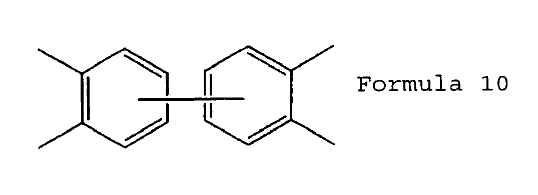 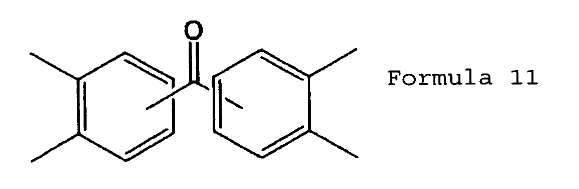 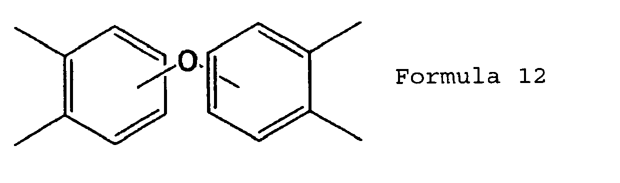 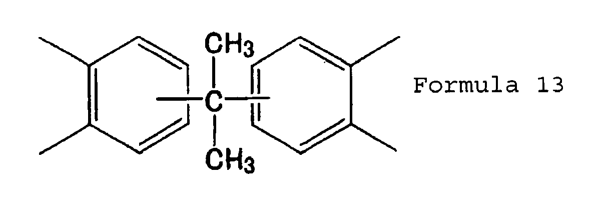 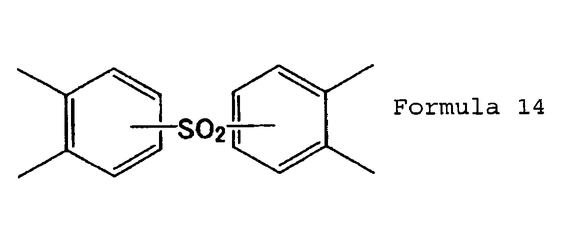 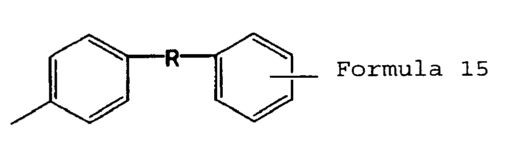 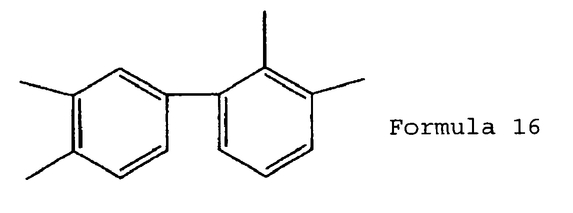 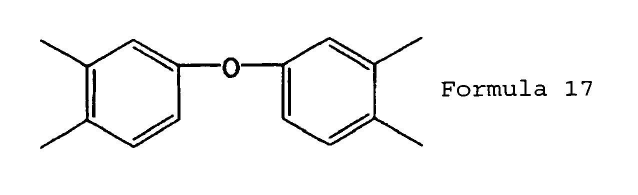 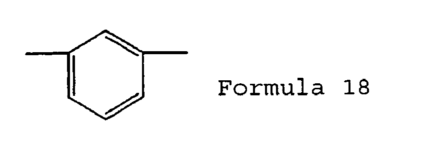 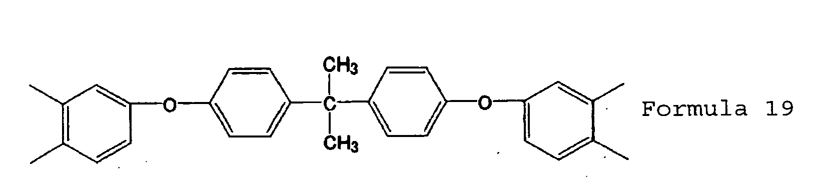 (in the above Formulae, R each independently is any one selected from the group consisting of -, -O-, -CO-, -SO₂-, -S-, -CH₂- and C(CH₃)₂, n each independently is from 0 to 7, and Z each independently is CH₃ or a phenyl group).
20. The hermetic sealing material for an image display device according to the above 18 or 19, wherein in the polyimide compound of the Formula 2, X' is the following Formula 20 or 21:

   - (R1)ₙ-Si-(OR2)₃₋ᵣR3ᵣ Formula 20

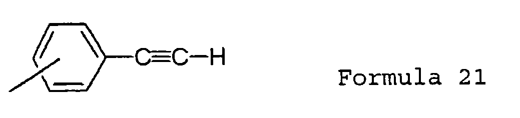

   (in the Formula 20, R1 each independently is CH₂ or a phenyl group, R2 and R3 each independently are CH₃ or C₂H₅, n is an integer of from 1 to 7, and r is an integer of from 0 to 2).
21. The hermetic sealing material for an image display device according to the above 18 or 19, wherein in the polyimide compound of the Formula 3, Y' is any one selected from the group consisting of the following Formulae 22 to 26: 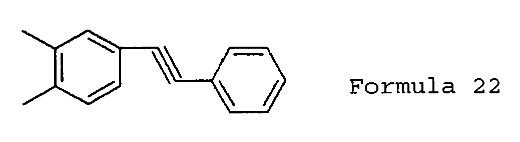 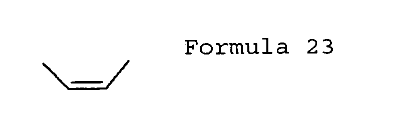 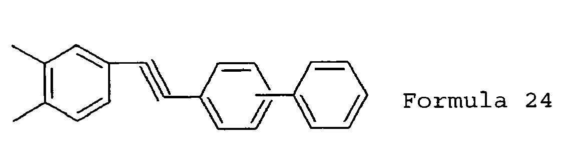 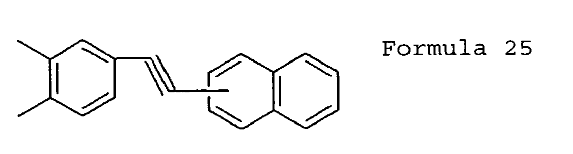 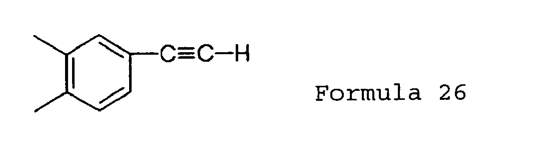
22. The hermetic sealing material for an image display device according to any one of the above 18 to 21, characterized in that the polyimide compounds of the Formulae 1 to 3 further have at least one crosslinkable group selected from the group consisting of a vinylene group, an ethynyl group, a vinylidene group, a benzocyclobutan-4'-yl group, an isocyanate group, an allyl group, an oxirane group, an oxetane group, a cyano group and an isopropenyl group.
23. The hermetic sealing material for an image display device according to the above 17, characterized by containing, as the main component, at least one of polyamic acid compounds having structures represented by the following Formulae 27 to 29: 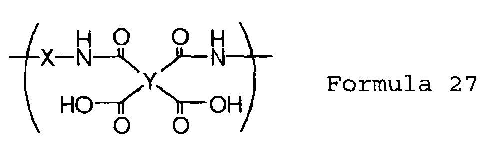 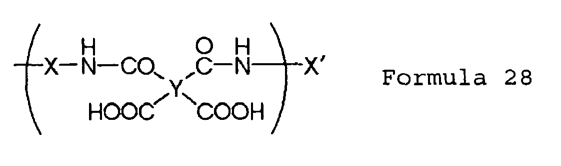 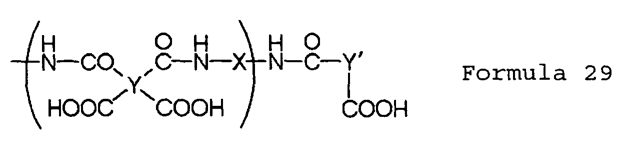 (in the Formulae, X is the main skeleton of a diamine compound, X' is the main skeleton of a monoamine compound, Y is the main skeleton of a tetracarboxylic dianhydride, and Y' is the main skeleton of a dicarboxylic anhydride).
24. The hermetic sealing material for an image display device according to the above 23, wherein in the polyamic acid compounds of the Formulae 27, 28 and 29, when X is any one selected from the group consisting of the following Formulae 4 to 8, Y is any one selected from the group consisting of the following Formulae 9 to 14; when X is the following Formula 15, Y is the following Formula 16 or 17; and when X is the following Formula 18, Y is the following Formula 19: 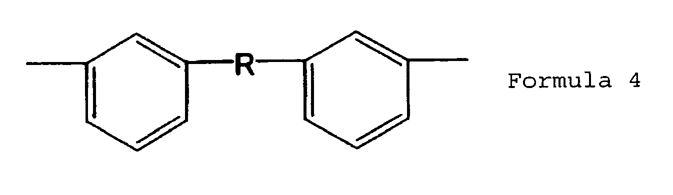 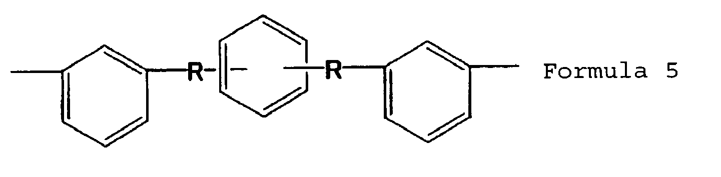 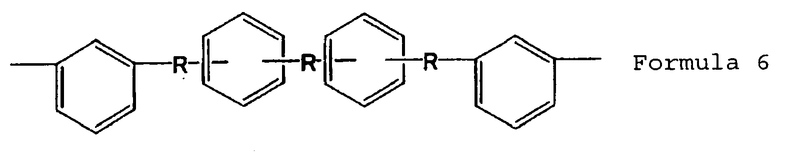 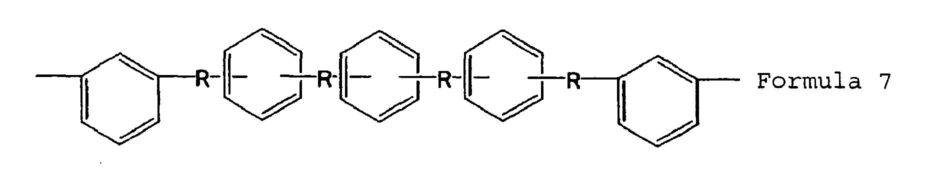 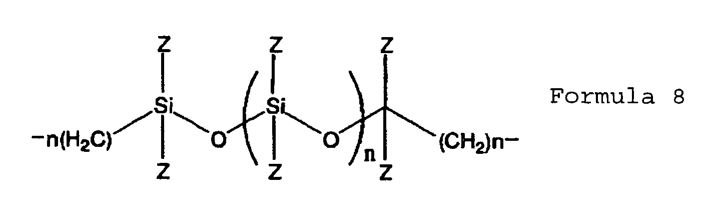 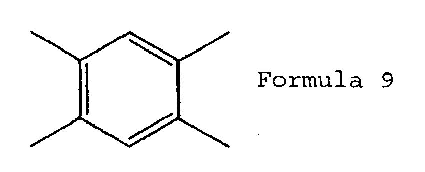 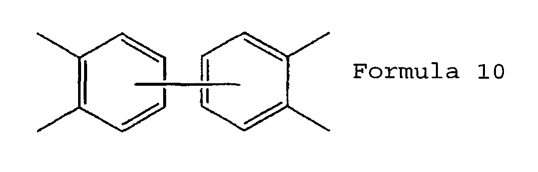 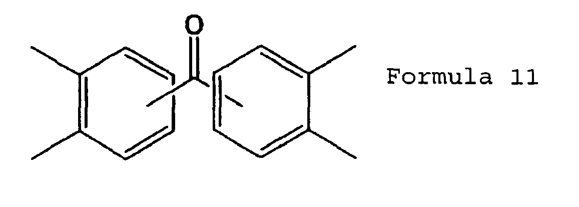 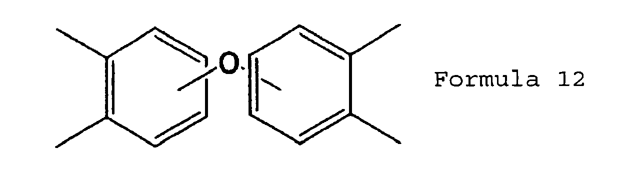 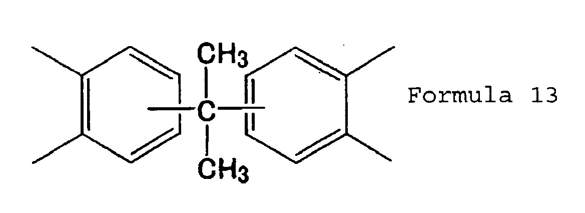 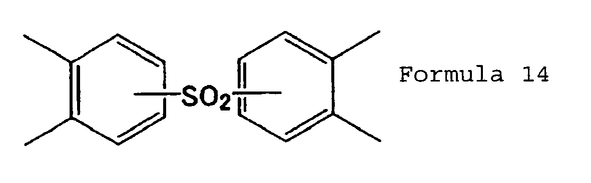 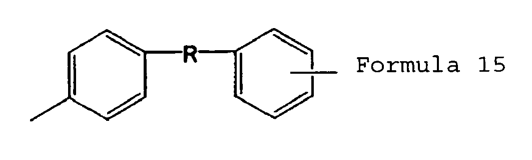 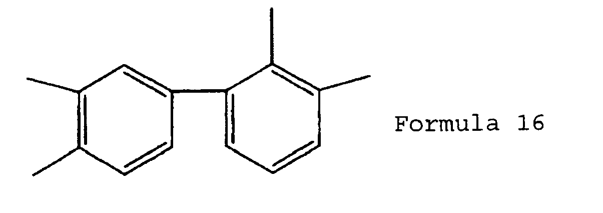 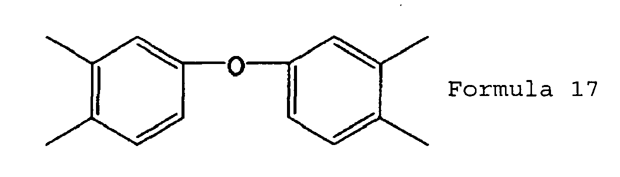 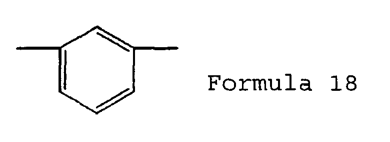 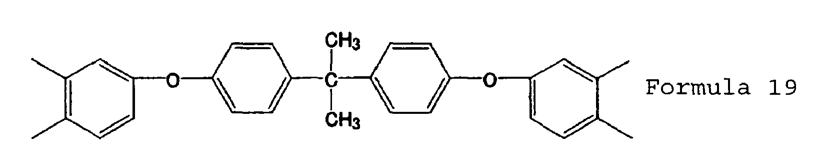 (in the above Formulae, R each independently is any one selected from the group consisting of -, -O-, -CO-, -SO₂-, -S-, -CH₂- and C(CH₃)₂, n each independently is from 0 to 7, and Z each independently is CH₃ or a phenyl group).
25. The hermetic sealing material for an image display device according to the above 23 or 24, wherein in the polyamic acid compound of the Formula 28, X' is the following Formula 20 or 21:

   -(R1)ₙ-Si-(OR2)₃₋ᵣR3ᵣ Formula 20

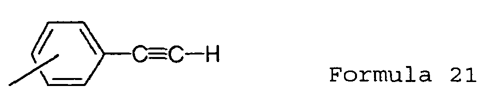

   (wherein R1 each independently is CH₂ or a phenyl group, R2 and R3 each independently are CH₃ or C₂H₅, n is an integer of from 1 to 7, and r is an integer of from 0 to 2).
26. The hermetic sealing material for an image display device according to the above 23 or 24, wherein in the polyamic acid compound of the Formula 29, Y' is any one selected from the group consisting of the following Formulae 22 to 26: 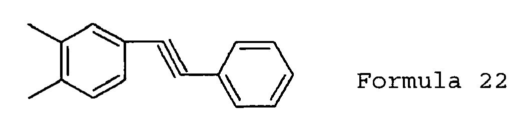 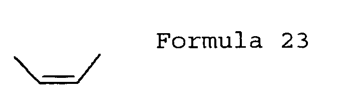 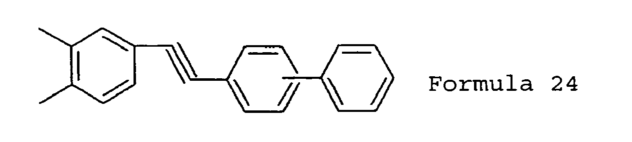 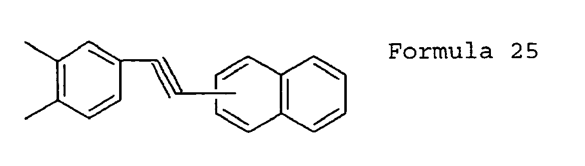 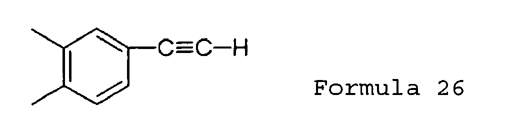
27. The hermetic sealing material for an image display device according to any one of the above 23 to 26, characterized in that the polyamic acid compounds of the Formulae 27 to 29 further have at least one crosslinkable group selected from the group consisting of a vinylene group, an ethynyl group, a vinylidene group, a benzocyclobutan-4'-yl group, an isocyanate group, an allyl group, an oxirane group, an oxetane group, a cyano group and an isopropenyl group.
28. An envelope for an image display device, characterized in that envelope-constituting members are sealed with the hermetic sealing material for an image display device as defined in any one of the above 18 to 27.
29. An image display device provided with the envelope for an image display device as defined in the above 28.
30. A method for sealing an envelope for an image display device, characterized by applying a primer layer-forming material containing an organic metal compound represented by the following Formula (A) and/or its hydrolysate to sealing surfaces of envelope-constituting members, then applying a hermetic sealing material containing a polyimide compound and/or a polyamic acid compound as the main component, or its solution, followed by heating at a temperature of from 250 to 400°C, to solidify the primer layer-forming material and the hermetic sealing material layer-forming material thereby to seal the envelope-constituting members:

   R²ₙMR¹₍₄₋ₙ₎ (A)

   (in the Formula, M is at least one element selected from the group consisting of Si, Ti and Zr, R¹ is a hydrolysable group, R² is a C₁₋₄ alkyl group or a phenyl group, and n is an integer of from 0 to 2).
31. The method for sealing an envelope for an image display device according to the above 30, wherein the hermetic sealing material layer containing a hydrolysate of a polyimide compound and/or a polyamic acid compound as the main component, contains a structure represented by the following Formula (B):

   -Si-(OR⁴)₃₋ᵣR⁵ᵣ (B)

   (in the Formula, R⁴ is a C₁₋₃ alkyl group, R⁵ is a C₁₋₃ alkyl group or a phenyl group, and r is from 0 to 2).
32. A composition for sealing an image display device, which comprises a primer layer-forming material containing a compound represented by the following Formula(A) and/or its hydrolysate and a hermetic sealing material containing a polyimide compound or a polyamic acid compound:

   R²ₙMR¹₍₄₋ₙ₎ (A)

   (in the Formula, M is at least one element selected from the group consisting of Si, Ti and Zr, R¹ is a hydrolysable group, R² is a C₁₋₄ alkyl group or a phenyl group, and n is an integer of from 0 to 2).

### EEFECTS OF THE INVENTION

In the envelope for an image display device of the present invention, its sealed portion is sealed with an organic hermetic sealing material having the following characteristics, whereby the sealed portion has sufficient strength against atmospheric pressure and a thermal stress applied in the process for producing an image display device particularly in a process of exhausting the envelope at a high temperature.
A fired body has a viscosity of at least 10⁵ Pa·s between a range of from 200 to 350°C.
· A fired body has a glass transition temperature Tg of at least 200°C as measured by a differential scanning calorimeter.

In the envelope for an image display device of the present invention, specifically, the sealed portion has a flexural strength of at least 30 MPa at 220°C, or a fired body of an organic hermetic sealing material used for the sealed portion has a flexural modulus of at least 300 MPa at 220°C. By such an excellent flexural strength, the problems of breakage of the sealed portion of the envelope in the process for producing an image display device are solved.

Further, in the envelope for an image display device of the present invention, the mass ratio (m₄₀₀/m₂₀) when a fired body of the organic hermetic sealing material used for the sealed portion is heated at 400°C is 0.99<m₄₀₀/m₂₀≦1.00, whereby the fired body of the organic hermetic sealing material will not substantially generate a cracked gas in a high temperature environment which undergoes in the process for producing an image display device, the obtained image display device will have favorable characteristics, and no failure in exhaustion will occur.

In the envelope for an image display device of the present invention, the strength of the sealed portion will not substantially decrease even when it is left at rest in a high temperature and high humidity atmosphere for a long time, such that the flexural strength after the sealed portion is left at rest in a constant temperature and constant humidity atmosphere at a temperature of 80°C in a humidity of 85% for 7 days, is at least 90% of the flexural strength before the still standing, and further, the envelope is excellent also in dielectric breakdown strength, hydraulic pressure resistance and display characteristics.

In the envelope for an image display device of the present invention, the sealed portion is excellent in dielectric breakdown strength, and the envelope has characteristics preferred as an envelope for an image display device.

In the envelope for an image display device of the present invention, sealing is carried out with an organic hermetic sealing material, whereby the envelope is free from lead, and influences over environment are considered.

The hermetic sealing material for an image display device of the present invention is an organic hermetic sealing material containing no lead, whereby its influences over environment are considered, and sealing can be carried out at a temperature lower than 400°C with it, and its fired body has a sufficient strength in a high temperature environment which it undergoes in the process for producing an image display device.

Further, the hermetic sealing material for an image display device of the present invention before firing has a minimum viscosity of at most 10³ Pa·s between a range of from 200 to 400°C, whereby it is excellent in wettability when applied to sealing surfaces of envelope-constituting members, and is excellent in handling efficiency in a high temperature environment which it undergoes in the process for producing an image display device.

Further, as the minimum viscosity before firing within a range of from 200 to 400°C is within the above range, even when bubbles are generated in the hermetic sealing material layer in the envelope production process, the generated bubbles are discharged to the outside, whereby a sealed portion excellent in the adhesive strength without bubbles can be constituted.

The image display device of the present invention is excellent in display characteristics since the sealed portion will not be broken in the production process, and firing of the hermetic sealing material in the production process is carried out at a temperature lower than 400°C.

By use of the hermetic sealing material for an image display device of the present invention, the operation for sealing the envelope is easy, and the sealed portion will not be broken in the process for producing an envelope particularly in a process of exhausting the envelope at a high temperature.

Further, according to the method for sealing an envelope for an image display device of the present invention and a composition for sealing an image display device to be used for the method, an envelope for an image display device can be produced with high efficiency.

### BRIEF DESCRIPTION OF THE DRAWINGS

Fig. 1 is a partially cut side view illustrating one embodiment of the image display device of the present invention, and the image display device is constituted as a CRT.
Fig. 2 is a partially cut side view illustrating another embodiment of the image display device of the present invention, and the image display device is constituted as a typical FED.

### MEANINGS OF SYMBOLS

- 1, 1':: Image display device
- 11:: Envelope (glass valve)
- 11':: Envelope
- 13:: Phosphor
- 14:: Aluminum film
- 15:: Shadow mask
- 16:: Electron gun
- 17:: Explosion-proof reinforcing band
- 18:: Stud pin
- 2:: Image display panel portion
- 2':: Image display panel portion (front panel portion)
- 21:: Image display region
- 22:: Skirt portion
- 3:: Glass funnel portion
- 3':: Rear panel portion
- 31:: Neck portion
- 4:: Exterior frame
- 5:: Organic hermetic sealing material layer
- 61:: Cathode
- 62:: Field emission cold cathode
- 63:: Gate electrode
- 64:: Insulating layer
- 65:: Anode
- 66:: Phosphor pixel

### BEST MODE FOR CARRYING OUT THE INVENTION

### (I) ENVELOPE FOR IMAGE DISPLAY DEVICE OF THE PRESENT INVENTION

In the present invention, the image display device is a so-called cathode luminescence type one wherein in a high vacuum, electrons emitted from a cathode and moving at a high speed are made to collide with a phosphor to cause excitation and light emission. Such a cathode luminescence type image display device is represented by a cathode ray tube (CRT) and an image display device having field emission cold cathode (FED).

Such an image display device has an envelope the interior of which is in a high vacuum, so as to realize cathode luminescence. In the envelope, a drive circuit to emit high speed electron beams and an image display panel portion coated with a phosphor which is excited by collision of the electron beams to cause fluorescence are provided.

The image display device of the present invention will be explained in detail below with reference to structures of conventional CRT and FED as examples. However, the image display device of the present invention is not limited only to CRT and FED, and widely includes image display devices having an envelope. As another example of the image display device having an envelope, a vacuum fluorescent display (VFD) may be mentioned.

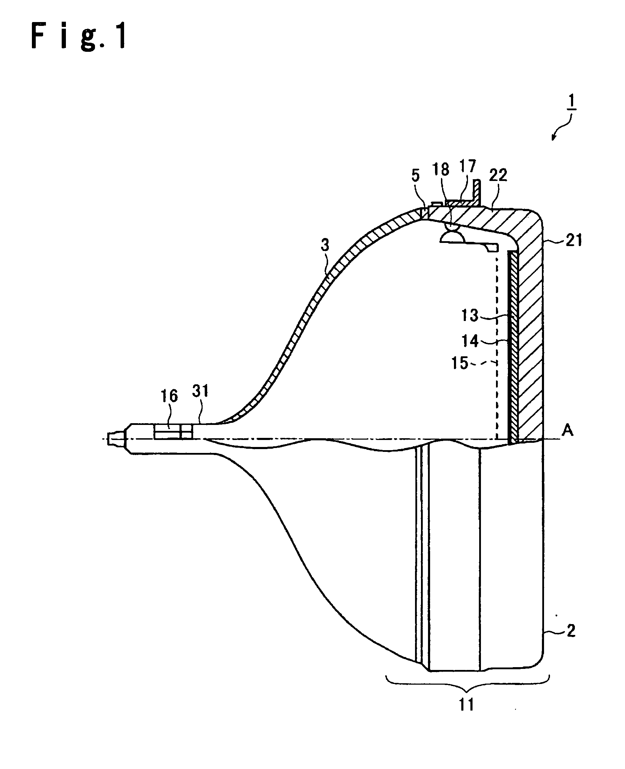

Fig. 1 is a partially cut side view illustrating one embodiment of the image display device of the present invention, and the image display device 1 is constituted as a CRT. In Fig. 1, the right side of the view corresponds to the front side, and the left side corresponds to the back side.

In Fig. 1, the image display device 1 has an envelope (glass valve) 11 comprising an image display panel portion 2 and a glass funnel portion 3. The image display panel portion 2 constituting the front side of the envelope 11 comprises a substantially plane image display region 21 located in the front portion thereof to display an image, and a skirt portion 22 extending from the side portion of the face portion including the image display region 21 toward the back portion. At the back end of the glass funnel portion 3 constituting the back side of the envelope 11, a neck 31 in which an electron gun 16 is accommodated is provided. The image display panel portion 2 and the glass funnel portion 3 constituting the envelope 11 are usually made of glass. However, the entire image display region 21 of the image display panel portion 2 is not necessarily made of glass, and the front side portion thereof may be made of a composite material comprising a light transmitting resin. Further, the members constituting the envelope 11 may be made of an inorganic material other than glass, specifically, they may be made of a ceramic or a metal, for example.

The image display device 1 of Fig. 1 has, in addition to the above members, an explosion-proof reinforcing band 17 to maintain strength, a phosphor 13 which generates fluorescence by an interaction with electron beams emitted from the electron gun 16, an aluminum film 14 which reflects the fluorescence to the image display surface 21 side, a shadow mask 15 to land the electron beams on a predetermined position of the phosphor 13, a stud pin 18 to fix the shadow mask 15 on the inner wall of the skirt portion 22, etc.

In the image display device 1 of the present invention, the image display panel portion 2 and the glass funnel portion 3 as members constituting the envelope 11 are sealed with an organic hermetic sealing material layer 5. The organic hermetic sealing material layer 5 is a layer of a fired body of an organic hermetic sealing material obtained by applying an organic hermetic sealing material to sealing surfaces of envelope-constituting members, i.e. applying an organic hermetic sealing material in a liquid state or attaching the organic hermetic sealing material as a film, followed by firing under desired conditions, by a method described hereinafter. In the image display device 1 of Fig. 1, the sealing surfaces of the members constituting the envelope 11, specifically, the end surface at the back side of the skirt portion 22 of the image display panel portion 2 and the end surface at the front side of the glass funnel portion 3 are sealed with the organic hermetic sealing material layer 5.

The envelope 11 after sealing is exhausted at a high temperature so that the interior thereof is in a high vacuum. This high temperature exhaust process is carried out usually at a temperature of from 250 to 380°C, but as described in section Background Art, heat treatment in production of an image display device is carried out preferably at a temperature as low as possible. Accordingly, it is considered that the high temperature exhaust process will be carried out at a temperature of from 200 to 330°C in future. In the high temperature exhaust process, atmospheric pressure and a thermal stress are applied to the sealed portion of the envelope. In the image display device of the present invention, a fired body of the organic hermetic sealing material used for sealing envelope-constituting members (hereinafter referred to as "the organic hermetic sealing material of the present invention") has a viscosity of at least 10⁵ Pa·s within a temperature range of from 200 to 350°C. The upper limit of the viscosity is not particularly limited, but is preferably at most 10¹⁴ Pa·s.

In the present invention, the viscosity of a fired body of the organic hermetic sealing material within a temperature range of from 200 to 350°C is within the above range, whereby the envelope, more specifically the sealed portion of the envelope has a sufficient strength against atmospheric pressure and thermal stress applied in the process for producing an image display device particularly in a process of exhausting the envelope at a high temperature. Accordingly, the problem of breakage of the sealed portion in the process for producing an image display device particularly in a process of exhausting the envelope at a high temperature is solved.

The image display device of the present invention is characterized in that the sealed portion of the envelope has a flexural strength of at least 30 MPa at 220°C. The flexural strength of the sealed portion of the envelope means the flexural strength of a portion having both organic hermetic sealing material layer 5 and portion of the envelope-constituting members adjacent thereto. With reference to the image display device 1 in Fig. 1 as an example, the flexural strength of a sealed portion comprising the back end portion of the skirt portion 22 and the front end portion of the funnel portion 3, is at least 30 MPa at 220°C. The flexural strength may be obtained, for example, as a measured value in a 4-point flexural test carried out by a method in accordance with JIS R1601 as disclosed in Examples described hereinafter.

In the image display device of the present invention, the flexural strength of the sealed portion of the envelope at 220°C is more preferably at least 40 MPa. When the flexural strength of the sealed portion of the envelope at 220°C is at least 40 MPa, particularly excellent strength against atmospheric pressure and a thermal stress applied in the high temperature exhaust process will be obtained.

In the image display device of the present invention, it is preferred that the sealed portion of the envelope always has a flexural strength of at least 30 MPa within a temperature range of from 200 to 330°C. When the flexural strength of the sealed portion of the envelope is always at least 30 MPa within the above temperature range, the sealed portion will always have a sufficient strength in a high temperature environment which it undergoes in the high temperature exhaust process. More preferably, the flexural strength of the sealed portion of the envelope is always at least 40 MPa within a temperature range of from 200 to 330°C.

The organic hermetic sealing material of the present invention preferably has a moderately low viscosity when applied to sealing surfaces of the envelope-constituting members. The organic hermetic sealing material of the present invention preferably has a minimum viscosity of at most 10³ Pa·s within a temperature range of from 200 to 400°C. The minimum viscosity is preferably as low as possible within the above range, but it is preferably at least 0.5 Pa·s. The minimum viscosity within a temperature range of from 200 to 400°C means a minimum viscosity of the unfired organic hermetic sealing material within the above temperature range. The organic hermetic sealing material of the present invention, which has a minimum viscosity within the above range within a temperature range of from 200 to 400°C, is excellent in wettability when applied to sealing surfaces of the envelope-constituting members, and is excellent in handling efficiency in the process for producing an image display device.

Further, in a case where the envelope-constituting members are sealed, bubbles may form in the organic hermetic sealing material layer in some cases. Further, bubbles may remain in the organic hermetic sealing material layer in some cases by inclusion of the air from the outside. If bubbles remain in the organic hermetic sealing material layer by such reasons, the adhesive strength at the sealed portion tends to decrease, and a problem of breakage of the sealed portion in the high temperature exhaust process or a decrease of the display characteristics of an image display device to be produced by using such an envelope may occur.

The organic hermetic sealing material of the present invention has a minimum viscosity within the above range within a temperature range of from 200 to 400°C, and accordingly even in a case where bubbles form in the sealing process or bubbles remain in the organic hermetic sealing material layer by inclusion of the air from the outside, the bubbles will be discharged to the outside in the firing step or pre-firing step as described hereinafter, since the viscosity of the organic hermetic sealing material is low. Resultingly, a sealed portion excellent in the adhesive strength without bubbles can be constituted, and the above-mentioned problem of breakage of the sealed portion or the possibility of the decrease of the display characteristics of an image display device can be solved.

The organic hermetic sealing material of the present invention is used as the hermetic sealing material of the envelope-constituting members, and accordingly it is preferred that the thermal expansion characteristics of the fired body will not change in a high temperature environment which it may undergo in the high temperature exhaust process. Accordingly, the fired body of the organic hermetic sealing material of the present invention has a glass transition temperature (Tg) of preferably at least 200°C, more preferably at least 220°C, further more preferably at least 250°C, as measured by a differential scanning calorimeter (DSC). When the glass transition temperature of the fired body of the organic hermetic sealing material is within the above range, the envelope, more specifically the sealed portion of the envelope is particularly excellent in strength against atmospheric pressure and a thermal stress applied in the high temperature exhaust process.

Further, the fired body of the organic hermetic sealing material of the present invention is preferably excellent in mechanical strength in a high temperature environment which it undergoes in the high temperature exhaust process. Specifically, the fired body of the organic hermetic sealing material of the present invention preferably has a flexural modulus of at least 300 MPa, more preferably at least 500 MPa at 220°C. Within the above range of the flexural modulus of the fired body of the organic hermetic sealing material at 220°C, when the organic hermetic sealing material of the present invention is used for sealing the envelope-constituting members, the sealed portion has sufficient strength particularly sufficient strength against atmospheric pressure and a thermal stress applied in the high temperature exhaust process. Accordingly, the problem of breakage of the sealed portion will not occur in the process for producing an envelope particularly in the process of exhausting the envelope at a high temperature.

The flexural modulus of the fired body of the organic hermetic sealing material can be determined, specifically, for example, by means of a dynamic mechanical spectrometer (DMS) as disclosed in Examples described hereinafter.

Since the organic hermetic sealing material of the present invention is used to seal the envelope-constituting members, its fired body is excellent in heat resistance. In the present invention, the heat resistance of the fired body of the organic hermetic sealing material is evaluated by means of the ratio of the mass at 400°C to the mass at 20°C (room temperature) (hereinafter referred to as "mass ratio when heated at 400°C"). Specifically, the organic hermetic sealing material of the present invention preferably satisfies a mass ratio when heated at 400°C (m₄₀₀/m₂₀) of 0.99<m₄₀₀/m₂₀₀≦1.00, where m₂₀ is the mass of the fired body at 20°C and m₄₀ is the mass of the fired body at 400°C. More preferably, 0.993<m₄₀₀/m₂₀≦1.00. When the mass ratio of the fired body of the organic hermetic sealing material when heated at 400°C is within the above range, the organic hermetic sealing material will not decompose at the sealed portion to generate a large amount of a cracked gas in a process of exhausting the envelope at a high temperature, the obtained image display device will have favorable display characteristics, and no failure in exhaustion will occur.

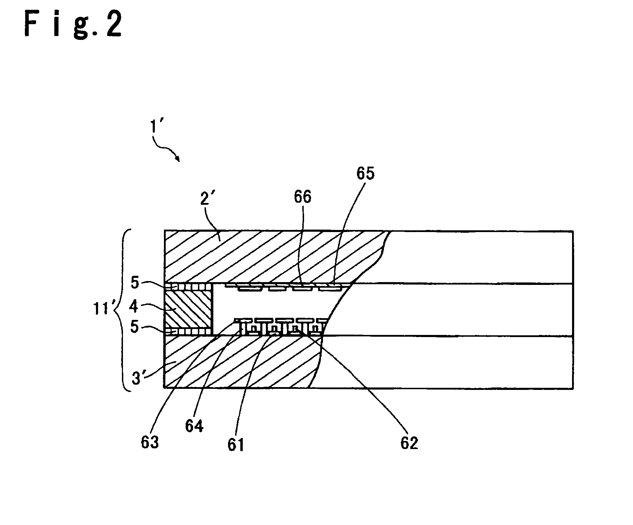

Fig. 2 is a partially cut side view illustrating another embodiment of the image display device of the present invention, and the image display device is constituted as a typical FED. In Fig. 2, the upper side of the view corresponds to the front side, and the lower side corresponds to the back side. In the image display device 1' of Fig. 2, an envelope 11' comprises a front panel portion (image display panel portion) 2' located in the front portion, and in the back portion, a rear panel portion 3' disposed to face the front panel portion 2', and an exterior frame 4 disposed between the front panel portion 2' and the rear panel portion 3'. The front panel portion 2', the rear panel portion 3' and the exterior frame 4 which are members to constitute the envelope 11' are usually made of glass. However, they may be made of an inorganic material other than glass, such as a ceramic or a metal. The bonded surfaces of the members constituting the envelope 11' are sealed with an organic hermetic sealing material layer 5. Accordingly, the bonded surfaces of the front panel portion 2' and the exterior frame 4, and the bonded surface of the rear panel portion 3' and the exterior frame 4, are sealed with the organic hermetic sealing material layer 5. In the image display device 1', the rear panel portion 3' is a field emission type electron source substrate, and it has cathodes 61 and field emission cold cathodes 62 formed on the cathodes 61 on its inner side surface i.e. on a surface which faces the front panel portion 2'. Further, on a surface of the rear panel portion 3' which faces the front panel portion 2', gate electrodes 63 to control electron current are formed with insulating layers 64 interposed therebetween. On the other hand, on a surface of the front panel portion 2' which faces the rear panel portion 3', anodes 65 and phosphor pixels 66 which are the pairs to the field emission cold cathodes 62 are formed.

In this FED image display device also, the organic hermetic sealing material layer 5, i.e. the organic hermetic sealing material of the present invention is required to have the same characteristics as those of the image display device 1 according to the first environment.

In the image display device of the present invention, the sealed portion of the envelope is preferably excellent in insulating characteristics, in addition to the above characteristics. Specifically, the sealed portion of the envelope preferably has a dielectric breakdown strength of at least 3 kV/mm. The dielectric breakdown strength required for the sealed portion of the envelope varies depending upon the structure of the image display device. Specifically, in a case where the image display device is constituted as a CRT such as the image display device 1 of the present invention shown in Fig. 1, the dielectric breakdown strength of the sealed portion is preferably at least 15 kV/mm, more preferably at least 20 kV/mm, furthermore preferably at least 25 kV/mm. On the other hand, in a case where the image display device is constituted as a FED such as the image display device 1' of the present invention shown in Fig. 2, the dielectric breakdown strength of the sealed portion is preferably at least 3 kV/mm, more preferably at least 8 kV/mm.

Further, in the image display device of the present invention, the sealed portion of the envelope preferably contains substantially no lead. Here, "the sealed portion contains substantially no lead" means that the lead content in the organic hermetic sealing material layer constituting the sealed portion is such a level that lead which is usually attached as impurities to glass as the envelope-constituting members is diffused. Specifically, the lead content is preferably at most 0.1 mass%, more preferably at most 0.01 mass%, furthermore preferably at most 0.001 mass%, based on the mass of the organic hermetic sealing material constituting the organic hermetic sealing material layer.

Of the envelope for an image display device according to another embodiment of the present invention, the sealed portion has very excellent characteristics. Namely, the flexural strength of the sealed portion of the envelope for an image display device of the present invention at 220°C is at least 40 MPa. By the flexural strength at the sealed portion being at least 40 MPa, the sealed portion has a sufficient strength against atmospheric pressure and a thermal stress applied in the process of exhausting the envelope at a high temperature in the process for producing an image display device.

Further, the sealed portion of the envelope for an image display device of the present invention has a flexural strength after being left at rest in a constant temperature and constant humidity atmosphere at a temperature of 80°C in a humidity of 85% for 7 days of at least 90% of the flexural strength before the still standing.

The conditions at a temperature of 80°C in a humidity of 85% correspond to a very high temperature and humid atmosphere, and the image display device will not undergo such severe conditions in a normal use, and such conditions are an accelerated test with respect to humidity resistance. In such an accelerated test also, the sealed portion sealed by the present invention has a flexural strength of at least 90%, and some particularly excellent one has a flexural strength of at least 95%, or 100% or above.

In addition to the above characteristics, the sealed portion of the envelope sealed by the present invention has a dielectric breakdown strength of at least 3 kV/mm. The dielectric breakdown strength required for the sealed portion of the envelope for an image display device varies depending upon the structure of the image display device. Specifically, in a case where the image display device is constituted as a CRT such as the image display device 1 of the present invention shown in Fig. 1, the dielectric breakdown strength of the sealed portion is preferably at least 15 kV/mm, more preferably at least 20 kV/mm, furthermore preferably at least 25 kV/mm. On the other hand, in a case where the image display device is constituted as a FED such as the image display device 1' of the present invention shown in Fig. 2, the dielectric breakdown strength of the sealed portion is preferably at least 3 kV/mm, more preferably at least 8 kV/mm.

Further, the sealed portion of the envelope sealed by the present invention has a high hydraulic pressure resistance.

Further, there is such an advantage that the display characteristics of an image display device produced by using an envelope sealed by the present invention will not decrease. Heretofore, when members for constituting an envelope for an image display device are sealed, bubbles may form in the hermetic sealing material layer in some cases, or bubbles may remain in the hermetic sealing material layer in some cases by inclusion of the air from the outside, and if bubbles remain in the hermetic sealing material layer by such reasons, the display characteristics of the image display device decrease in some cases. However, in the case of the present invention, no decrease of the display characteristics occurs, as evident from Examples.

### (II) HERMETIC SEALING MATERIAL

The organic hermetic sealing material of the present invention widely includes organic hermetic sealing materials of which fired bodies have the above characteristics. Such organic hermetic sealing materials may be ones which are usually used as heat resistant adhesives, and specific examples thereof include a polyimide and a polyamic acid which is a precursor thereof, a polybenzimidazole, a polyquinoxaline, a polyphenylquinoxaline, an acetylene-terminal polyimide and a polyphenylquinoxaline.

The organic hermetic sealing material of the present invention preferably contains a polyimide compound or a polyamic acid compound which is a precursor thereof as the main component. The polyimide compound is preferably a polyimide compound having a structure represented by the following Formula 1:

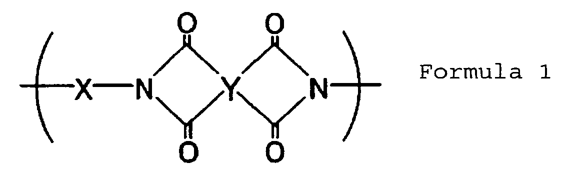

In the above Formula 1, X represents the main skeleton of a diamine compound, and Y represents the main skeleton of a tetracarboxylic dianhydride. The main skeleton of a diamine compound means the main chain of a diamine compound except for the amino groups, and the main skeleton of a tetracarboxylic dianhydride means the main except for the carboxylic dianhydrides.

More specifically, X and Y have the following meanings.
(A) When X is any one of the following Formulae 4 to 8, Y is any one of the following Formulae 9 to 14. In the following Formulae 4 to 8, R each independently is any one selected from the group consisting of -, -O-, -CO-, -SO₂-, -S-, -CH₂- and C(CH₃)₂, n each independently is from 0 to 7, and Z each independently is CH₃ or a phenyl group.
(B) When X is the following Formula 15, Y is the following Formula 16 or 17. In the following Formula 15, R each independently is any one selected from the group consisting of -, -O-, -CO-, -SO₂-, -S-, -CH₂- and C(CH₃)₂.
(C) When X is the following Formula 18, Y is the following Formula 19:

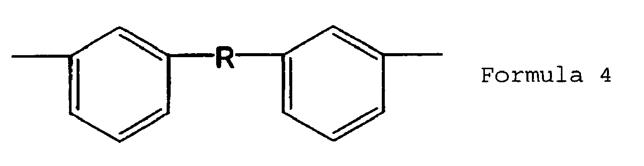

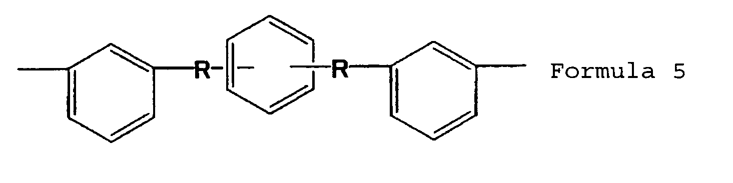

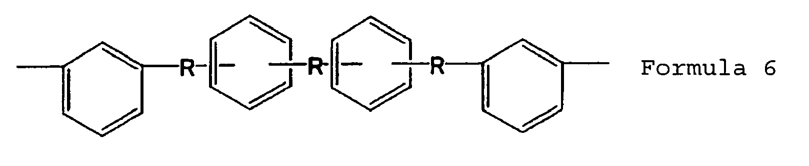

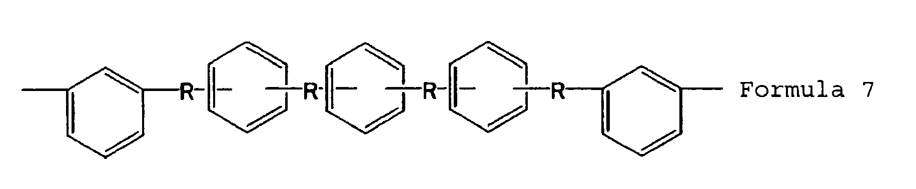

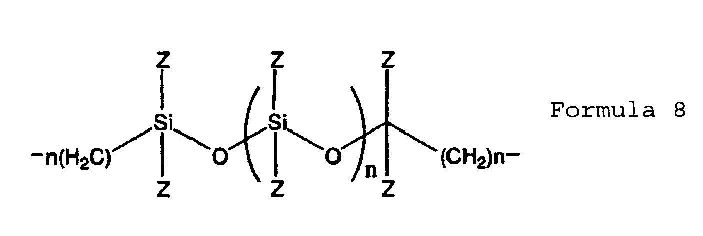

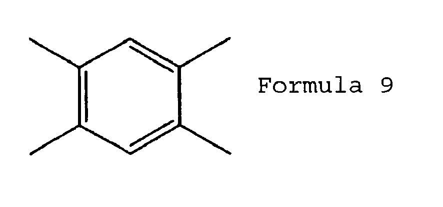

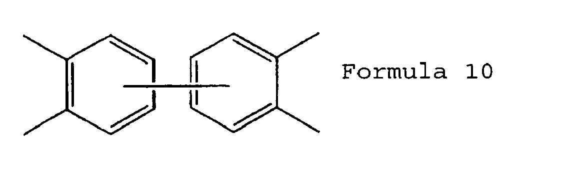

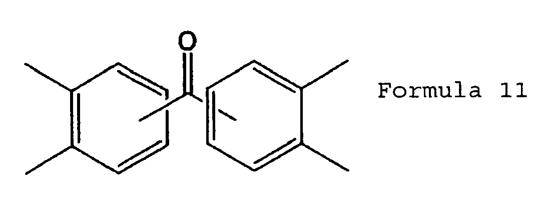

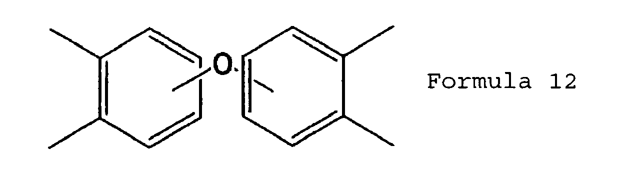

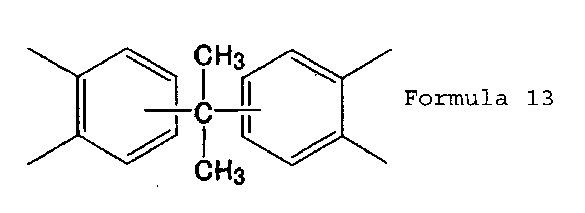

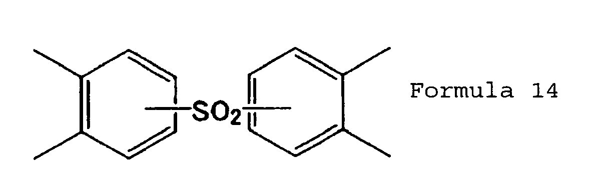

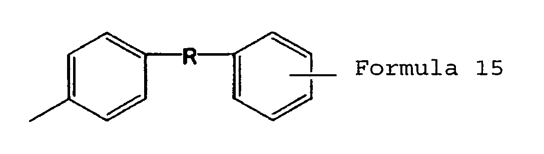

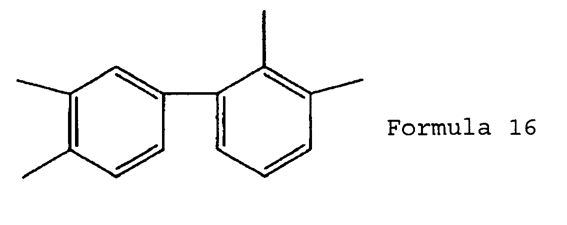

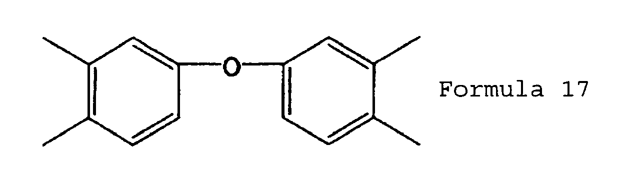

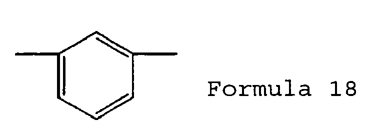

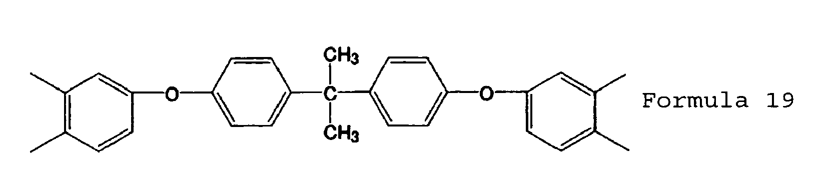

The polyimide compound may comprise the structure represented by the Formula 1 alone, but its terminal portion may be sealed with a monoamine or a dicarboxylic anhydride. The polyimide compound the terminal of which is sealed with a monoamine or a dicarboxylic anhydride preferably has a structure represented by the following Formula 2 or 3. In the following Formulae 2 and 3, X and Y are as defined for the Formula 1, X' represents the main skeleton of a monoamine compound, and Y' represents the main skeleton of a dicarboxylic anhydride. The main skeleton of a monoamine compound means the main chain of a monoamine compound except for the amino group, and the main skeleton of a dicarboxylic anhydride means the main chain expect for the carboxylic anhydrides.:

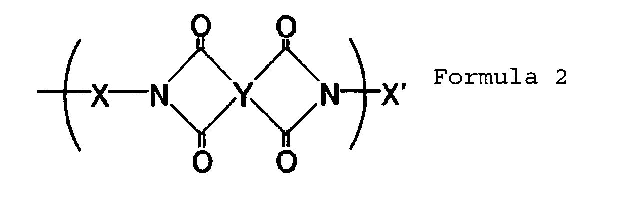

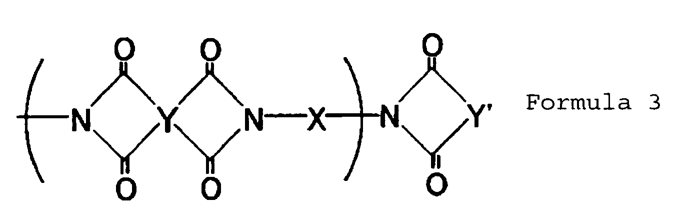

When the polyimide compound of the above Formula 2 is used, X' in the Formula 2 is preferably the following Formula 20 or 21:

- (R1)ₙ-Si-(OR2)₃₋ᵣR3ᵣ Formula 20

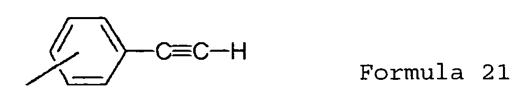

In the Formula 20, R1 each independently is CH₂ or a phenyl group, R2 and R3 each independently are CH₃ or C₂H₅, n is an integer of from 1 to 7, and r is an integer of from 0 to 2.

By using the polyimide compound of the Formula 2 wherein X' is represented by the Formula 20 or 21, as the organic hermetic sealing material of the present invention, it becomes possible to improve adhesive properties of the organic hermetic sealing material to glass. Further, the polyimide compound of the Formula 2 wherein X' is the Formula 20 or 21 undergoes heat curing at the time of firing and is thereby excellent in adhesive strength in a high temperature environment which it undergoes in the high temperature exhaust process.

In a case where the polyimide compound of the above Formula 3 is used, Y' in the Formula 3 is preferably any one of the following Formulae 22 to 26:

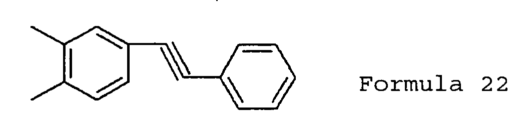

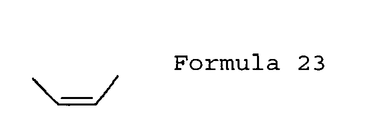

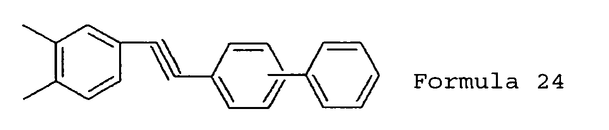

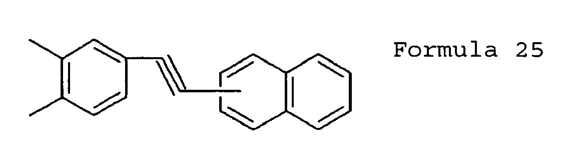

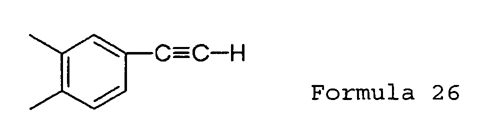

The polyimide compound of the Formula 3 wherein Y' is any one of the Formulae 22 to 26 undergoes heat curing at the time of firing and is thereby excellent in adhesive strength in a high temperature environment which it undergoes in the high temperature exhaust process.

In the present invention, the polyimide compounds of the above Formulae 1 to 3 preferably have at least one crosslinkable group selected from a vinylene group, an ethynyl group, a vinylidene group, a benzocyclobutan-4'-yl group, an isocyanate group, an allyl group, an oxirane group, an oxirane group, a cyano group and an isopropenyl group. The polyimide compounds of the above Formulae 1 to 3 undergo heat curing at the time firing by introduction of such a crosslinkable group, and are excellent in adhesive strength in a high temperature environment which they undergo in the high temperature exhaust process.

Further, it is possible to use polyamic acid compounds having structures represented by the following Formulae 27 to 29 for the organic hermetic sealing material of the present invention:

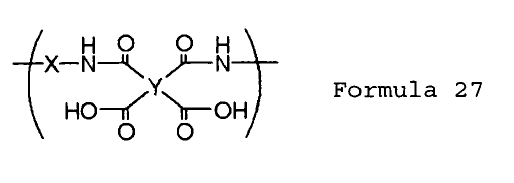

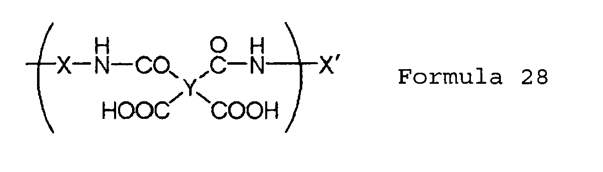

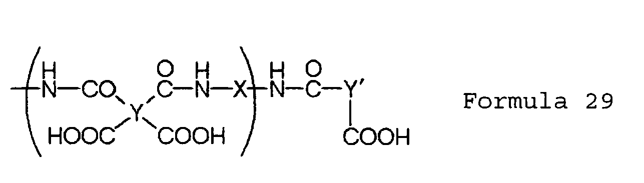

In the above Formulae 27 to 29, X is the main skeleton of a diamine compound, X' is the main skeleton of a monoamine compound, Y is the main skeleton of a tetracarboxylic dianhydride and Y' is the main skeleton of a dicarboxylic anhydride.

More specifically, X and Y have the following meanings.
(A) When X is any one of the above Formulae 4 to 8, Y is any one of the above Formulae 9 to 14. In the above Formulae 4 to 8, R each independently is any one selected from the group consisting of -, -O-, -CO-, -SO₂-, -S-, -CH₂- and C(CH₃)₂, n each independently is from 0 to 7, and Z each independently is CH₃ or a phenyl group.
(B) When X is the above Formula 15, Y is the above Formula 16 or 17. In the above Formula 15, R each independently is any one selected from the group consisting of -, -O-, -CO-, -SO₂-, -S-, -CH₂- and C(CH₃)₂.
(C) When X is the above Formula 18, Y is the above Formula 19.

When the polyamic acid compound of the above Formula 28 is used, X' in the Formula 28 is preferably the above Formula 20 or 21.

By using the polyamic acid compound of the Formula 28 wherein X' is the Formula 20 or 21, as the organic hermetic sealing material of the present invention, it becomes possible to improve adhesive properties of the organic hermetic sealing material to glass. Further, the polyamic acid compound of the Formula 28 wherein X' is the Formula 20 or 21 undergoes heat curing at the time of firing and is thereby excellent in adhesive strength in a high temperature environment which it undergoes in the high temperature exhaust process.

In a case where the polyamic acid compound of the above Formula 29 is used, Y' in the Formula 29 is preferably any one of the above Formulae 22 to 26. The polyamic acid compound of the Formula 29 wherein Y' is any one of the Formulae 22 to 26 undergoes heat curing at the time of firing and is thereby excellent in adhesive strength in a high temperature environment which it undergoes in the high temperature exhaust process.

The polyamic acid compounds of the above Formulae 27 to 29 preferably have at least one crosslinkable group selected from a vinylene group, an ethynyl group, a vinylidene group, a benzocyclobutan-4'-yl group, an isocyanate group, an allyl group, an oxirane group, an oxirane group, a cyano group and an isopropenyl group. The polyamic acid compounds of the above Formulae 27 to 29 undergo heat curing at the time of firing by introduction of such a crosslinkable group and are excellent in adhesive strength in a high temperature environment which they undergo in the high temperature exhaust process.

The polyimide compound having a structure of the Formula 1 and the polyamic acid compound of the Formula 27 are prepared by condensation of a diamine compound and a tetracarboxylic dianhydride. Their molecular weights can be controlled by adjusting the molar ratio of monomer components in the same manner as in the case of a conventional polycondensed polymer. That is, it becomes possible to form a polymer by using from 0.8 to 1.2 mol of a diamine compound per mol of a tetracarboxylic dianhydride. When the polyimide compound or the polyamic acid compound is a polymer, its fired body tends to be excellent in mechanical strength, insulating characteristics, etc., and no out gas will be generated in a high temperature environment, and thus such a polymer is preferred for an organic hermetic sealing material. As the molar ratio, the diamine compound is more preferably from 0.9 to 1.1 mol per 1 mol of the acid dianhydride.

As diamines which can be used for preparation of the polyimide compound having a structure of the Formula 1 or the polyamic acid compound of the Formula 27, specifically, the following diamine compounds may, for example, be mentioned.
a) p-Phenylenediamine and m-phenylenediamine having one benzene ring.
b) 3,3'-Diamino diphenyl ether, 3,4'-diamino diphenyl ether, 4,4'-diamino diphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 4,4'-diaminobenzophenone, 3,4'-diaminobenzophenone, 3,3'-diaminodiphenylmethane, 4,4'-diaminodiphenylmethane, 3,4'-diaminodiphenylmethane, 2,2-di(3-aminophenyl)propane, 2,2-di(4-aminophenyl)propane, 2-(3-aminophenyl)-2-(4-aminophenyl)propane, 2,2-di(3-aminophenyl)-1,1,1,3,3,3-hexafluoropropane, 2,2-di(4-aminophenyl)-1,1,1,3,3,3-hexafluoropropane, 2-(3-aminophenyl)-2-(4-aminophenyl)-1,1,1,3,3,3-hexafluoropropane, 1,1-di(3-aminophenyl)-1-phenylethane, 1,1-di(4-aminophenyl)-1-phenylethane and 1-(3-aminophenyl)-1-(4-aminophenyl)-1-phenylethane, having two benzene rings.
c) 1,3-Bis(3-aminophenoxy)benzene, 1,3-bis(4-aminophenoxy)benzene, 1,4-bis(3-aminophenoxy)benzene, 1,4-bis(4-aminophenoxy)benzene, 1,3-bis(3-aminobenzoyl)benzene, 1,3-bis(4-aminobenzoyl)benzene, 1,4-bis(3-aminobenzoyl)benzene, 1,4-bis(4-aminobenzoyl)benzene, 1,3-bis(3-amino-α,α-dimethylbenzyl)benzene, 1,3-bis(4-amino-α,α-dimethylbenzyl)benzene, 1,4-bis(3-amino-α,α-dimethylbenzyl)benzene, 1,4-bis(4-amino-α,α-dimethylbenzyl)benzene, 1,3-bis(3-amino-α,α-ditrifluoromethylbenzyl)benzene, 1,3-bis(4-amino-α,α-ditrifluoromethylbenzyl)benzene, 1,4-bis(3-amino-α,α-ditrifluoromethylbenzyl)benzene, 1,4-bis(4-amino-α,α-ditrifluoromethylbenzyl)benzene, 2,6-bis(3-aminophenoxy)benzonitrile and 2,6-bis(3-aminophenoxy)pyridine, having three benzene rings.
d) 4,4'-Bis(3-aminophenoxy)biphenyl, 4,4'-bis(4-aminophenoxy)biphenyl, bis[4-(3-aminophenoxy)phenyl] ketone, bis[4-(4-aminophenoxy)phenyl] ketone, bis[4-(3-aminophenoxy)phenyl] sulfide, bis[4-(4-aminophenoxy)phenyl] sulfide, bis[4-(3-aminophenoxy)phenyl] sulfone, bis[4-(4-aminophenoxy)phenyl] sulfone, bis[4-(3-aminophenoxy)phenyl] ether, bis[4-(4-aminophenoxy)phenyl] ether, 2,2-bis[4-(3-aminophenoxy)phenyl]propane, 2,2-bis[4-(4-aminophenoxy)phenyl]propane, 2,2-bis[3-(3-aminophenoxy)phenyl]-1,1,1,3,3,3-hexafluoropropane and 2,2-bis[4-(4-aminophenoxy)phenyl]-1,1,1,3,3,3-hexafluoropropane, having four benzene rings.
e) 1,3-Bis[4-(3-aminophenoxy)benzoyl]benzene, 1,3-bis[4-(4-aminophenoxy)benzoyl]benzene, 1,4-bis[4-(3-aminophenoxy)benzoyl]benzene, 1,4-bis[4-(4-aminophenoxy)benzoyl]benzene, 1,3-bis[4-(3-aminophenoxy)-α,α-dimethylbenzyl]benzene, 1,3-bis[4-(4-aminophenoxy)-α,α-dimethylbenzyl]benzene, 1,4-bis[4-(3-aminophenoxy)-α,α-dimethylbenzyl]benzene and 1,4-bis[4-(4-aminophenoxy)-α,α-dimethylbenzyl]benzene, having five benzene rings.
f) 4,4'-Bis[4-(4-aminophenoxy)benzoyl]diphenyl ether, 4,4'-bis[4-(4-amino-α,α-dimethylbenzyl)phenoxy]benzophenone, 4,4'-bis[4-(4-amino-α,α-dimethylbenzyl)phenoxy]diphenyl sulfone and 4,4'-bis[4-(4-aminophenoxy)phenoxy]diphenyl sulfone, having six benzene rings.
g) 3,3'-Diamino-4,4'-diphenoxybenzophenone, 3,3'-diamino-4,4'-dibiphenoxybenzophenone, 3,3'-diamino-4-phenoxybenzophenone and 3,3'-diamino-4-biphenoxybenzophenone, having an aromatic substituent.
h) 6,6'-Bis(3-aminophenoxy)-3,3,3'3'-tetramethyl-1,1'-spirobiindan and 6,6'-bis(4-aminophenoxy)-3,3,3'3'-tetramethyl-1,1'-spirobiindan, having a spirobiindan ring.
i) 1,3-Bis(3-aminopropyl)tetramethyldisiloxane, 1,3-bis(4-aminobutyl)tetramethyldisiloxane, α,ω-bis(3-aminopropyl)polydimethylsiloxane and α,ω-bis(3-aminobutyl)polydimethylsiloxane, being siloxane diamines.
j) Bis(aminomethyl) ether, bis(2-aminoethyl) ether, bis(3-aminopropyl) ether, bis(2-aminomethoxy)ethyl] ether, bis[2-(2-aminoethoxy)ethyl] ether, bis [2- (3-aminopropoxy)ethyl] ether, 1,2-bis(aminomethoxy)ethane, 1,2-bis(2-aminoethoxy)ethane, 1,2-bis[2-(aminomethoxy)ethoxy]ethane, 1,2-bis[2-(2-aminoethoxy)ethoxy]ethane, ethylene glycol bis(3-aminopropyl) ether, diethylene glycol bis(3-aminopropyl) ether and triethylene glycol bis(3-aminopropyl) ether, being ethylene glycol diamines.
k) Ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane and 1,12-diaminododecane, being methylene diamines.
l) 1,2-diaminocyclohexane, 1,3-diaminocyclohexane, 1,4-diaminocyclohexane, 1,2-di(2-aminoethyl)cyclohexane, 1,3-di(2-aminoethyl)cyclohexane, 1,4-di(2-aminoethyl)cyclohexane, bis(4-aminocyclohexyl)methane, 2,6-bis(aminomethyl)bicyclo[2.2.1]heptane and 2,5-bis(aminomethyl)bicyclo[2.2.1]heptane, being alicyclic diamines.

The above exemplified diamine compounds may suitably be used alone or as mixed. Further, the diamine compound may be a diamine in which some of or all hydrogen atoms on the aromatic ring of the diamine compound substituted by a substituent selected from a fluoro group, a methyl group, a methoxy group, a trifluoromethyl group and a trifluoromethoxy group. Further, a part of the diamine compound may be replaced with a triamine or a tetramine for the purpose of introducing branches. Specific examples of such a triamine include pararosaniline.

As the tetracarboxylic dianhydride which can be used to prepare the polyimide compound having a structure of the Formula 1 and the polyamic acid compound of the Formula 27, specifically, the following compounds may, for example, be mentioned.

Pyromellitic dianhydride, 3,3',4,4'-biphenyltetracarboxylic dianhydride, 3,3',4,4'-benzophenone tetracarboxylic dianhydride, dianhydride of bis(3,4-dicarboxyphenyl) ether, dianhydride of bis(3,4-dicarboxyphenyl) sulfide, dianhydride of bis(3,4-dicarboxyphenyl) sulfone, dianhydride of 2,2-bis(3,4-dicarboxyphenyl)propane, dianhydride of 2,2-bis(3,4-dicarboxyphenyl)-1,1,1,3,3,3-hexafluoropropane, dianhydride of 1,3-bis(3,4-dicarboxyphenoxy)benzene, dianhydride of 1,4-bis(3,4-dicarboxyphenoxy)benzene, dianhydride of 4,4'-bis(3,4-dicarboxyphenoxy)biphenyl, dianhydride of 2,2-bis[(3,4-dicarboxyphenoxy)phenyl]propane, 2,3,6,7-naphthalenetetracarboxylic dianhydride, 1,4,5,8-naphthalenetetracarboxylic dianhydride, ethylenetetracarboxylic dianhydride, butanetetracarboxylic dianhydride, cyclopentanetetracarboxylic dianhydride, 2,2',3,3'-benzophenonetetracarboxylic dianhydride, 2,2',3,3'-biphenyltetracarboxylic dianhydride, dianhydride of 2,2-bis(2,3-dicarboxyphenyl)propane, dianhydride of 2,2-bis(2,3-dicarboxyphenyl)-1,1,1,3,3,3-hexafluoropropane, dianhydride of bis(2,3-dicarboxyphenyl) ether, dianhydride of bis(2,3-dicarboxyphenyl) sulfide, dianhydride of bis(2,3-dicarboxyphenyl) sulfone, dianhydride of 1,3-bis(2,3-dicarboxyphenoxy)benzene, dianhydride of 1,4-bis(2,3-dicarboxyphenoxy)benzene and 1,2,5,6-naphthalenetetracarboxylic dianhydride.

The above exemplified tetracarboxylic dianhydrides may suitably be used alone or as mixed.

Further, any of the above tetracarboxylic dianhydrides may be used in such a manner that some of or all hydrogen atoms on the aromatic ring thereof are substituted by a substituent selected from a fluoro group, a methyl group, a methoxy group, a trifluoromethyl group and a trifluoromethoxy group.

Further, an ethynyl group, a benzocyclobuten-4'-yl group, a vinyl group, an allyl group, a cyano group, an isocyanate group, a nitrile group or an isopropenyl group being a crosslinking site may be introduced as a substituent to some of or all hydrogen atoms on the aromatic ring of the above acid dianhydride. Further, a vinylene group, a vinylidene group or an ethynylidene group being a crosslinking site may be incorporated into the main chain skeleton, not as a substituent, preferably within a range not to impair moldability.

Further, a part of the tetracarboxylic dianhydride may be replaced with a hexacarboxylic trianhydride or an octacarboxylic tetranhydride for the purpose of introducing branches.

Further, to impart heat resistance to the organic hermetic sealing material, in preparation of the polyimide compound or the polyamic acid compound, a dicarboxylic anhydride or a monoamine compound may be incorporated as a terminal sealing compound. The polyimide compounds of the above Formulae 2 and 3 and the polyamic acid compounds of the above Formulae 28 and 29 can be obtained by sealing the terminal of the polyimide compound or the polyamic acid compound with a dicarboxylic anhydride or a monoamine compound.

As the dicarboxylic anhydride which can be used as the terminal sealing compound, specifically, phthalic anhydride, 2,3-benzophenonedicarboxylic anhydride, 3,4-benzophenonedicarboxylic anhydride, anhydride of 2,3-dicarboxyphenyl phenyl ether, anhydride of 3,4-dicarboxyphenyl phenyl ether, 2,3-biphenyldicarboxylic anhydride, 3,4-biphenyldicarboxylic anhydride, anhydride of 2,3-dicarboxyphenylphenyl sulfone, anhydride of 3,4-dicarboxyphenylphenyl sulfone, anhydride of 2,3-dicarboxyphenylphenyl sulfide, anhydride of 3,4-dicarboxyphenylphenyl sulfide, 1,2-naphthalenedicarboxylic anhydride, 2,3-naphthalenedicarboxylic anhydride, 1,8-naphthalenedicarboxylic anhydride, 1,2-anthracenedicarboxylic anhydride, 2,3-anthracenedicarboxylic anhydride and 1,9-anthracenedicarboxylic anhydride may, for example, be mentioned. Such a dicarboxylic anhydride may be substituted by a group having no reactivity with an amine compound or a tetracarboxylic dianhydride. They may be used alone or as a mixture of two or more of them. Among these aromatic dicarboxylic anhydrides, preferred is phthalic anhydride.

As the monoamine compound which can be used as the terminal sealing compound, specifically, the following compounds may, for example, be mentioned. Aniline, o-toluidine, m-toluidine, p-toluidine, 2,3-xylidine, 2,6-xylidine, 3,4-xylidine, 3,5-xylidine, o-chloroaniline, m-chloroaniline, p-chloroaniline, o-bromoaniline, m-bromoaniline, p-bromoaniline, o-nitroaniline, p-nitroaniline, m-nitroaniline, o-aminophenol, p-aminophenol, m-aminophenol, o-anisidine, m-anisidine, p-anisidine, o-phenetidine, m-phenetidine, p-phenetidine, o-aminobenzaldehyde, p-aminobenzaldehyde, m-aminobenzaldehyde, o-aminobenzonitrile, p-aminobenzonitrile, m-aminobenzonitrile,2-aminobiphenyl, 3-aminobiphenyl, 4-aminobiphenyl, 2-aminophenyl phenyl ether, 3-aminophenyl phenyl ether, 4-aminophenyl phenyl ether, 2-aminobenzophenone, 3-aminobenzophenone, 4-aminobenzophenone, 2-aminophenylphenyl sulfide, 3-aminophenylphenyl sulfide, 4-aminophenylphenyl sulfide, 2-aminophenylphenyl sulfone, 3-aminophenylphenyl sulfone, 4-aminophenylphenyl sulfone, α-naphthylamine, β-naphthylamine, 1-amino-2-naphthol, 5-amino-1-naphthol, 2-amino-1-naphthol, 4-amino-1-naphthol, 5-amino-2-naphthol, 7-amino-2-naphthol, 8-amino-1-naphthol, 8-amino-2-naphthol, 1-aminoanthracene, 2-aminoanthracene, 9-aminoanthracene and the like. Usually, among these aromatic monoamines, preferred is an aniline derivative. They may be used alone or as a mixture of two or more of them.

These monoamine compounds and/or dicarboxylic anhydrides may be used alone or as a mixture of two or more of them. As the amount of such a terminal sealing compound used, the monoamine compound (when the excess component is a tetracarboxylic dianhydride) or the dicarboxylic anhydride (when the excess component is a diamine) is used in an amount of from one to several times the difference in number of mols used between the diamine compound and the tetracarboxylic dianhydride. However, it is common to use the terminal sealing compound in an amount of at least about 0.01 molar time the amount of one component.

The reaction for preparation of the polyimide compound or the polyamic acid compound is carried out usually in an organic solvent. The organic solvent used for the reaction may be any solvent so long as it has no problem for preparation of the polyimide compound and the polyamic acid compound, and the formed polyimide compound or the polyamic acid compound is dissolved in it. Specifically, an amide type solvent, an ether type solvent or a phenol type solvent may be mentioned, and more specifically, N,N-dimethylformamide, N,N-dimethylacetamide, N,N-diethylacetamide, N,N-dimethylmethoxyacetamide, N-methyl-2-pyrrolidone, 1,3-dimethyl-2-imidazolidinone, N-methylcaplolactam, 1,2-dimethoxyethane-bis(2-methoxyethyl) ether, 1,2-bis(2-methoxyethoxy)ethane, bis[2-(2-methoxyethoxy)ethyl] ether, tetrahydrofuran, 1,3-dioxane, 1,4-dioxane, pyridine, picoline, dimethyl sulfoxide, dimethylsulfone, tetramethylurea, hexamethylphosphoramide, phenol, o-cresol, m-cresol, p-cresol, cresylic acid, o-chlorophenol, m-chlorophenol, p-chlorophenol and anisole may, for example, be mentioned. They may be used alone or as a mixture of two or more of them. An amide type solvent is particularly preferred in view of stability of a solution and workability.

The prepared polyimide compound or the polyamic acid compound as dissolved in such an organic solvent may be used as an organic hermetic sealing material solution described hereinafter. In the case of use in such a state, the solvent for the polyimide compound is preferably cresol, and the solvent for the polyamic acid compound is preferably N-methylpyrrolidone. Such an organic solvent may be used also as a solvent when the prepared polyimide compound or the polyamic acid compound is used as a solution.

Further, for preparation of the polyimide compound or the polyamic acid compound, an organic base catalyst may coexist. As the organic base catalyst, a tertiary amine such as pyridine, α-picoline, β-picoline, γ-picoline, quinoline, isoquinoline or triethylamine may be used, and particularly preferred is pyridine or γ-picoline. The amount of such a catalyst used is from 0.001 to 0.50 mol per mol of the total tetracarboxylic dianhydride. It is particularly preferably from 0.01 to 0.1 mol.

The reaction temperature when the polyamic acid compound is prepared is from -20 to 60°C, preferably from 0 to 40°C. The reaction time varies depending upon the type of the tetracarboxylic dianhydride used, the type of the solvent, the reaction temperature, etc., and it is from 1 to 48 hours as a measure, and is usually from several hours to a dozen hours. In the present application, the organic solvent solution containing a polyamic acid compound obtained by such a method is referred to as an organic hermetic sealing material solution containing a polyamic acid compound. The polyamic acid compound is a precursor of a polyimide compound, and the polyamic acid compound thus obtained is then subjected to heat dehydration at a temperature of from 150°C to 400°C for imidation and is used as an organic hermetic sealing material.

Further, the reaction temperature when the polyimide compound is prepared is at least 100°C, preferably from 150 to 300°C, and the reaction is carried out usually by drawing water generated by the reaction. It is possible to prepare, prior to the imidation, a polyamic acid compound as the precursor thereof at a low temperature of at most 100°C first, and then increase the temperature to at most 100°C for imidation, or it is possible to simply mix a tetracarboxylic dianhydride with a diamine compound and then immediately increase the temperature to at most 100°C in the presence of an organic base for imidation. The reaction time varies depending upon the type of the tetracarboxylic dianhydride used, the type of the solvent, the type and amount of the organic base catalyst, the reaction temperature, etc. As a measure, the reaction is carried out until the amount of distilled water substantially reaches a theoretical amount (usually not all distilled water is recovered, and the recovery rate is from about 70 to 90%), and the reaction time is usually at a level of from several hours to a dozen hours. In this case, it is common and effective to remove water generated by the imidation reaction by adding an azeotropic agent such as toluene to the reaction system and removing the water by azeotropy. Otherwise, it is possible to prepare the polyamic acid as a precursor and then chemically imidate it by using an imidating agent such as acetic anhydride. In the present application, the organic solvent solution containing a polyimide compound obtained by such a method is referred to as an organic hermetic sealing material solution containing a polyimide compound. The organic hermetic sealing material solution containing a polyimide compound has favorable storage stability, and when it is applied to the sealing surfaces of envelope-constituting members made of glass, then heated and dried or pre-fired and then fired, a sufficient 90° sealing peel strength will be obtained even by firing relatively at a low temperature under a low pressure. The drying or pre-firing temperature varies depending upon the boiling point of the solvent and can not be specified, but is usually from 150 to 300°C. Firing is carried out at a temperature within a range of from 250°C to 400°C.

The polyimide compound may be used as a film formed by a known method, not as a solution having it dissolved in an organic solvent.

Further, in order to improve sealing properties of the organic hermetic sealing material, a diaminosiloxane compound may be incorporated in the organic hermetic sealing material, in addition to the above components (e.g. JP-A-5-74245, JP-A-5-98233, JP-A-5-98234, JP-A-5-98235, JP-A-5-98236, JP-A-5-98237 and JP-A-5-112760). The diaminosiloxane is represented by any one of the above Formulae 1 to 3 and 27 to 29 (wherein X in the Formulae is the Formula 8). Accordingly, when the diaminosiloxane is used in combination, as the polyimide compound or the polyamic acid compound, any one of the above Formulae 1 to 3 and 27 to 29, wherein X is any of the Formulae 4 to 7, is used. The diaminosiloxane is used in an amount of at most 0.10 mol per mol of the polyimide compound having a structure of any of the Formulae 1 to 3 or the polyamic acid compound of any of the Formulae 27 to 29. When the amount of the diaminosiloxane is at most 0.1 mol, heat resistance which the organic hermetic sealing material originally has will not be impaired, and there will be no problem in storage stability such that the organic hermetic sealing material solution undergoes layer separation.

As an index of the molecular weight of the polyimide compound, usually logarithmic viscosity number is employed. The logarithmic viscosity number of the polyimide compound of the present invention is from 0.01 to 5.0, preferably from 0.10 to 0.50, in a mixed solvent of p-chlorophenol and phenol (90:10) at a concentration of 0.5 g/dL at 35°C.

The molecular weight of the polyamic acid compound can be measured by gel permeation chromatography (GPC), and the mass average molecular weight of the polyamic acid of the present invention is from 4,000 to 30,000, preferably from 5,000 to 15,000.

Further, such an organic hermetic sealing material may be mixed with a coupling agent, an inorganic filler or the like depending upon the purpose.

The coupling agent is used to improve sealing properties, and the amount of use is from 0.1 mass% to 5 mass% in the organic hermetic sealing material. High sealing properties will be obtained by using at least 0.1 mass%. Further, heat resistance can be maintained by using at most 5 mass%. As the coupling agent which can be used, a known coupling agent may be used. Specifically, a trialkoxysilane compound or a methyl dialkoxysilane compound may be mentioned. More specifically, γ-glycidoxypropylmethyldimethoxysilane, γ-glycidoxypropyltrimethoxysilane, γ-glycidoxypropylmethyldiethoxysilane, γ-glycidoxypropyltriethoxysilane, γ-aminopropylmethyldimethoxysilane, γ-aminopropyltrimethoxysilane, γ-aminopropylmethyldimethoxysilane, γ-aminopropyltrimethoxysilane, N-aminoethyl-γ-iminopropylmethyldimethoxysilane, N-aminoethyl-γ-iminopropyltrimethoxysilane, γ-mercaptopropylmethyldimethoxysilane, γ-aminopropyltrimethoxysilane, γ-mercaptopropylmethyldimethoxysilane, γ-mercaptopropyltrimethoxysilane, isocyanatopropylmethyldiethoxysilane or γ-isocyanatopropyltriethoxysilane may, for example, be mentioned.

The inorganic filler may be used for the purpose of adjusting the viscosity of the solution, decreasing the thermal stress of the fired body, or for another purpose, and it may be selected from known inorganic compounds and is not particularly restricted. Specifically, it may, for example, be calcium carbonate, magnesium carbonate, barium sulfate, magnesium sulfate, aluminum silicate, zirconium silicate, iron oxide, titanium oxide, aluminum oxide (alumina), zinc oxide, silicon dioxide, potassium titanate, kaolin, talc, asbestos powder, quartz powder, mica or glass fibers.

Further, in the present invention, a lead-free inorganic hermetic sealing material such as a phosphoric acid type or a bismuth type may be used in combination with the organic hermetic sealing material of the present invention, under conditions that the above conditions are met. Such an inorganic hermetic sealing material is preferably used in a case where the image display device has a constituting element which is required to be sealed at a higher temperature, specifically at a temperature of 400°C or higher, in a case where the characteristics have to be matched, or in other cases.

### (III) PRIMER LAYER

In the present invention, the above sealed portion is preferably formed with a primer layer on at least one side of the hermetic sealing material layer. The primer layer is formed by a primer layer-forming material containing a fired body of a compound represented by the Formula (A) or its hydrolysate:

R²ₙMR¹₍₄₋ₙ₎ (A)

In the Formula (A), M is at least one element selected from the group consisting of Si, Ti and Zr, R¹ is a hydrolyzable group, R² is a C₁₋₄ alkyl group or a phenyl group, and n is an integer of from 0 to 2.

In the Formula (A), R¹ is a group capable of being hydrolyzed usually without catalyst in the coexistence of excessive water at from 25 to 100°C to form a hydroxyl group or a siloxane bond. n is an integer of from 0 to 2, preferably an integer of from 0 to 1, particularly preferably 0. The smaller the number of n, the more the number of hydroxyl groups to be formed, whereby the number of bonds within the envelope members made of glass and the above hermetic sealing material layer will increase, and favorable adhesion at the interface will be achieved. In the hydrolyzed of the compound represented by the Formula (A), non-hydrolyzed products may partially remain.

Preferred examples of R¹ include a hydrogen atom, a C₁₋₄ alkoxy group, a halogen atom and an isocyanate group. Specific examples of the C₁₋₄ alkoxy group include a methoxy group, an ethoxy group, a propoxy group and a butoxy group. An alkoxy group is preferred, as the hydrolysis is accelerated when an acid is present as the catalyst. In a case where the compound of the Formula (A) has an alkoxy group, it becomes possible to form a large number of hydroxyl groups depending upon the hydrolysis and condensation reaction conditions, and accordingly it becomes possible to increase the adhesion at the interface. Further, a compound having some alkoxy groups replaced with acetylacetonato groups may also be used.

Specific examples of a halogen atom include fluorine, chlorine, bromine and iodine. Since the hydrolysis rate of a compound having an isocyanate group or a halogen atom is high, hydrolysis will proceed by moisture in the air even when the compound is applied as it is. Therefore, the possibility of reaction with the envelope members or the hermetic sealing material is higher than the possibility of the condensation reaction of the hydrolysable compound itself, whereby the adhesive properties at the interface can be increased. A preferred hydrolysable group may be an alkoxy group or an isocyanate group in view of handling efficiency and safety.

M in the Formula (A) is at least one member selected from the group consisting of Si, Ti and Zr, and a compound containing such an element is likely to form hydroxyl groups, whereby the adhesive properties at the interface can be increased. Si is more preferred in view of availability, with which reaction is easily controlled, which is easily handled, and the storage stability of which is high.

R² in the Formula (A) is a C₁₋₄ alkyl group or a phenyl group. It is preferably a methyl group, an ethyl group, a butyl group or a phenyl group. If the carbon number excessively increases, the function will be impaired due to hydrophobicity or steric hindrance. A methyl group or an ethyl group is preferred.

As preferred specific examples of the compound represented by the Formula (A), a silicone compound may, for example, be tetrachlorosilane, tetramethoxysilane, tetraethoxysilane, tetrapropoxysilane, tetrabutoxysilane, tetraisocyanatesilane, methyltrichlorosilane, methyltrimethoxysilane, methyltriisocyanatesilane, ethyltrimethoxysilane, butyltrimethoxysilane, dimethyldichlorosilane, dimethyldimethoxysilane, dimethyldiisocyanatesilane, phenyltrichlorosilane or phenyltrimethoxysilane.

Further, a titanium compound may, for example, be titanium tetrachloride, titanium tetramethoxide, titanium tetraethoxide, titanium tetrapropoxide, titanium tetrabutoxide, titanium tripropoxymonoacetylacetonate or titanium dipropoxybisacetylacetonate, and a zirconium compound may, for example, be zirconium tetrapropoxide, zirconium tetrabutoxide or zirconium tributoxymonoacetylacetonate.

The compound represented by the above Formula (A) and/or its hydrolysate is dissolved or dispersed in a medium such as an alcohol preferably at a concentration of from 0.5 to 10 mass%, as the case requires, and formed into a primer layer-forming material in the form of a solution or a dispersion.

Further, a hydrolysable and condensable compound containing an aluminum element may be added to proceed the hydrolysis condensation reaction. Specific examples thereof include an alkoxide of aluminum such as aluminum isopropoxide.

### (IV) SEALING METHOD

The sealing of envelope-constituting members of an image display device with the organic hermetic sealing material of the present invention may be carried out in the same manner as a method of using a conventional glass frit. Namely, a solution of the organic hermetic sealing material of the present invention containing a polyimide compound or a polyamic acid as the main component is applied to sealing surfaces of the envelope-constituting members, or a film of the organic hermetic sealing material of the present invention containing a polyimide compound as the main component is attached to sealing surfaces, followed by drying or pre-firing at a relatively low temperature (150 to 200°C).

Then, the sealing surfaces are put together and fired at a temperature higher than the above temperature, specifically within a temperature range of from 250 to 400°C for from 500 to 100 minutes, more preferably within a temperature range of from 330 to 400°C for from 300 to 10 minutes, furthermore preferably within a temperature range of from 330 to 400°C for from 60 to 10 minutes, whereby the envelope-constituting members are sealed. Then, in order that the interior thereof is in a high vacuum, vacuum exhaustion is carried out at a high temperature of from 200 to 330°C to produce an envelope for an image display device.

In a case where envelope-constituting members for an image display device are sealed by using a primer layer in the present invention, a primer layer-forming material comprising a solution or a dispersion containing the compound represented by the above Formula (A) and/or its hydrolysate is applied to sealing surfaces of envelope-constituting members for an image display device to be sealed. Application may be carried out either by spraying or brush coating, but suitably a primer layer having a thickness preferably at a level of from 1 to 100 µm is formed on the sealing surfaces after drying. The drying is carried out at room temperature in a short time, and the conditions therefore varies depending upon the type of the primer.

After the primer layer is formed, a hermetic sealing material containing a polyimide compound and/or a polyamic acid as the main component or its solution is applied or a hermetic sealing material film containing a polyimide compound as the main component is attached to the primer layer. The applied surface is dried or pre-fired preferably at from 150 to 200°C to form a hermetic sealing material layer. The primer layer and the hermetic sealing material layer are formed preferably on both sealing surfaces of the envelope-constituting members to be sealed, but as the case requires, one of the sealing surfaces may have only a primer layer formed thereon.

Then, the sealing surfaces of the envelope-constituting members having the primer layer and the hermetic sealing material layer are put together and fired preferably at from 250 to 400°C for from 500 to 10 minutes, more preferably at from 330 to 400°C for from 300 to 10 minutes, furthermore preferably at from 330 to 400°C for from 60 to 10 minutes and sealed. Then, in order that the interior of the envelope-constituting members is in a high vacuum, vacuum exhaustion is carried out at a high temperature of from 200 to 330°C to produce an envelope for an image display device.

The firing of the organic hermetic sealing material of the present invention is carried out under ordinary conditions in the process for producing an image display device. Specifically, it may be carried out in an inert gas atmosphere such as in a nitrogen atmosphere or in an argon atmosphere, or may be carried out in the air. The firing temperature is usually within a range of from 250 to 400°C, and is a temperature higher than the temperature in the high temperature vacuum exhaust process to be carried out subsequently. Since the firing temperature for the sealing in the present invention is less than 400°C, problems such as thermal deformation of a metal member in an image display device which occur when a conventional frit glass is used for the hermetic sealing material, are dissolved.

The envelope 11 after sealing is exhausted at a high temperature so that the interior thereof is in a high vacuum. Heretofore, this high temperature exhaust process is carried out at from 250 to 380°C, but as described in section Background Art, heat treatment in production of an image display device is carried out preferably at a temperature as low as possible. Accordingly, it is considered that the high temperature exhaust process will be carried out at a temperature of from 200 to 330°C in future. In the high temperature exhaust process, atmospheric pressure and a thermal stress are applied to the sealed portion of the envelope. In the image display device of the present invention, a fired body of an organic hermetic sealing material used for sealing the envelope-constituting members (hereinafter referred to as "the organic hermetic sealing material of the present invention") has a minimum viscosity of at least 10⁵ Pa·s within a temperature range of from 200 to 350°C.

In the present invention, the fired body of the organic hermetic sealing material has a minimum viscosity within the above range within a temperature range of from 200 to 350°C, whereby the envelope more specifically a sealed portion of the envelope has sufficient strength against atmospheric pressure and thermal stress applied in the process for producing an image display device particularly in a process of exhausting the envelope at a high temperature. Accordingly, the problem of breakage of the sealed portion in the process for producing an image display device particularly in a process of exhausting the envelope at a high temperature is dissolved.

In a case where the primer layer is used, the above description is with respect to a case where the primer layer-forming material and the hermetic sealing material forming the hermetic sealing material layer are separately applied in this order, but in the present invention, they can be simultaneously applied to the sealing surfaces of the envelope-constituting members as a sealing composition containing the primer layer-forming material and the hermetic sealing material forming the hermetic sealing material layer. Such a sealing composition is preferably one containing a primer layer-forming material containing a compound represented by the following Formula (A) or its hydrolysate and a hermetic sealing material containing a polyimide compound or a polyamic acid compound:

R²ₙMR¹₍₄₋ₙ₎ (A)

In the formula, M is at least one element selected from the group consisting of Si, Ti and Zr, R¹ is a hydrolysable group, R² is a C₁₋₄ alkyl group or a phenyl group, and n is an integer of from 0 to 2.

The sealing composition suitably contains from 0.5 to 10 parts by mass, particularly preferably from 1 to 5 parts by mass of the primer layer-forming material based on 100 parts by mass of the hermetic sealing material.

### EXAMPLES

Now, the present invention will be described in further detail with reference to Examples and Comparative Examples.

### PREPARATION EXAMPLE 1

To a container equipped with a stirrer, a reflux condenser and a nitrogen introduction tube, 44.21g (0.12 mol) of 1,3-bis(3-aminophenoxy)benzene, 31.23g (0.06 mol) of 2,2-bis(3,4-phenoxyphenyldicarboxylic anhydride)propane, 5.96 g (0.024 mol) of 2-phenylethynylphenyldicarboxylic anhydride, 10.47 g (0.048 mol) of pyromellitic dianhydride and 275 g of m-cresol are put, followed by stirring at room temperature for 20 hours to obtain a polyamic acid (1), which is reacted at 200°C for 3 hours and then cooled to room temperature. 550 g of toluene is added, followed by filtration to obtain a polyimide (1).

### PREPARATION EXAMPLE 2

To a container equipped with a stirrer, a reflux condenser and a nitrogen introduction tube, 43.85 g (0.15 mol) of 1,3-bis(3-aminophenoxy)benzene, 39.72 g (0.135 mol) of 3,3',4,4'-biphenyltetracarboxylic dianhydride, 7.44 g (0.03 mol) of 2-phenylethynylphenyldicarboxylic anhydride and 275 g of m-cresol are put, followed by stirring at room temperature for 20 hours to obtain a polyamic acid (2), which is reacted at 200°C for 3 hours and then cooled to room temperature. 550 g of methanol is added, followed by filtration to obtain a polyimide (2).

### PREPARATION EXAMPLE 3

To a container equipped with a stiller, a reflux condenser and a nitrogen introduction tube, 39.47 g (0.135 mol) of 1,3-bis(3-aminophenoxy)benzene, 44.13 g (0.15 mol) of 3,3',4,4'-bihenyltetracarboxylic dianhydride, 7.09 g (0.03 mol) of aminopropyltriethoxysilane and 275 g of m-cresol are put, followed by stirring at room temperature for 20 hours. Then, reaction is carried out at 200°C for some hours and the reaction mixture is cooled to room temperature. 550 g of methanol is added, followed by filtration to obtain a polyimide (3).

### PREPARATION EXAMPLE 4

TO a container equipped with a stiller, a reflux condenser and a nitrogen introduction tube, 43.85 g (0.15 mol) of 1,3-bis(3-aminophenoxy)benzene, 39.72 g (0. 135 mol) of 2,2-bis-biphenyltetracarboxylic dianhydride, 4.44 g (0.03 mol) of phthalic anhydride and 275 g of m-cresol are put, followed by stirring at room temperature for 20 hours. Then, reaction is carried out at 200°C for 3 hours, and the reaction mixture is cooled to room temperature. 550 g of methanol is added, followed by filtration to obtain a polyimide (4).

### EXAMPLE 1

(1) Melt viscosity
   The polyimide (1) is processed into predetermined dimensions, and its viscosity is measured within a range of from room temperature (25°C) to 400°C by a parallel plate method. The minimum viscosity within a temperature range of from 200°C to 400°C is shown in Table 1.
(2) Measurement of viscosity of fired body
   The polyimide (1) is subjected to heat treatment (fired) at 375°C for 2 hours and processed into predetermined dimensions, and then its viscosity is measured from room temperature (25°C) to 400°C by a parallel plate method. The minimum viscosity within a temperature range of from 200°C to 350°C is shown in Table 1.
(3) Flexural strength of sealed portion
   An organic hermetic sealing material solution containing the polyimide (1) in cresol at a concentration of 15 mass% is applied to a sealing end surface of a funnel portion of an envelope for a 25 inch CRT and dried at 200°C for 1 hour, and then an image display portion is set, followed by firing at 375°C for 60 minutes to obtain a sealed portion. After firing, the sealed portion is cut to prepare a sample with a width of 5 mm and a length of 60 mm, and a four-point flexural strength test is carried out at 220°C by a method in accordance with JIS R1601. The result is shown in Table 1.
(4) Method of measuring glass transition temperature
   A certain amount of the polyimide (1) is sampled in a cell of a differential scanning calorimeter (DSC) (DSC6200 manufactured by Seiko Instruments Inc.), and measurement is carried out under conditions where the temperature is increased from room temperature 25°C to 450°C at 8°C/min in the cell. An endothermic peak is read from the obtained DSC curve and represented as Tg.
(5) Flexural modulus of sealing material
   The polyimide (1) is dried at 200°C for 1 hour and then fired at 375°C to obtain an organic hermetic sealing material film (thickness: 0.1 mm). The modulus of the obtained film at 220°C is measured by means of a dynamic mechanical spectrometer (DMS) (DMS110 manufactured by Seiko Instruments Inc.). The result is shown in Table 1.
(3) Mass ratio when heated at 400°C
   A certain amount of the polyimide (1) is sampled in a cell (TG-DTA6200 manufactured by Seiko Instruments Inc.) for measurement by thermogravimetric differential thermal analysis (TG-DTA), and dried in the cell at 200°C for 1 hour, and then fired at 375°C. After cooling to room temperature, TG measurement is carried out under conditions where the temperature is increased from room temperature to 550°C at 10°C/min. The value (m₄₀₀/m₂₀) obtained by dividing the mass m₄₀₀ at 400°C by the mass m₂₀ at room temperature (20°C) is regarded as the mass ratio when heated at 400°C. The result is shown in Table 1.
(7) Confirmation of bubbles in adhesive layer
   The organic hermetic sealing material solution described in (3) is applied to a glass piece (60 mm × 30 mm × 5mm) cut out from a funnel portion of an envelope for a 25 inch CRT and dried at 200°C for 1 hour, and then a glass piece (60 mm × 30 mm × 5mm) cut out from a glass panel portion is disposed thereon, followed by firing at 375°C. Presence or absence of bubbles in the sealed portion of the sample piece after firing is visually observed. The result is shown in Table 1. Symbols in Table 1 have the following meanings:
   ○: no bubbles
   Δ: a small number of bubbles observed
   ×: a large number of bubbles observed
(8) Dielectric breakdown strength
   The organic hermetic sealing material solution described in (3) is applied to a glass piece (60 mm × 30 mm × 5 mm) cut out from a funnel portion of an envelope for a 25 inch CRT and dried at 200°C for 1 hour, and then a glass piece (60 mm × 30 mm × 5 mm) cut out from a glass panel portion is disposed thereon, followed by firing at 375°C for 60 minutes. A direct current voltage is applied to both ends of the sealed portion of the sample piece after firing, and the pressure is increased, and the value obtained by dividing the voltage at breakage by the thickness of glass is shown in Table 1 as dielectric breakdown strength.
(9) Hydraulic pressure resistance
   An envelope for a 25 inch CRT is produced in the same procedure as in (3), a difference in pressure by water is continuously applied to the inside and outside of the envelope, and the difference in pressure when the envelope is broken is measured. When the envelope is broken at the sealed portion, the value is regarded as the hydraulic pressure resistance, and the result is shown in Table 1.
(10) Display characteristics
   A 25 inch CRT having a structure shown in Fig. 1 is produced in the same procedure as in (3), and image display characteristics are visually evaluated. The result is shown in Table 1. Symbols shown in Table 1 have the following meanings:
   ○: No problem in display characteristics
   Δ: Some problems in display characteristics
   ×: Problems in display characteristics

### EXAMPLES 2 to 4

The above tests (1) to (10) are carried out in the same manner as in Example 1 except that the polyimide (2), the polyamic acid (1) or the polyamic acid (2) is used instead of the polyimide (1). The results are shown in Table 1.

### EXAMPLE 5

The above tests (1) to (10) are carried out in the same manner as in Example 1 except that a mixture of the polyimide (2): the polyimide (3)=8:2 is used instead of the polyamic acid (1). The results are shown in Table 1. COMPARATIVE EXAMPLES 1 to 5

The above tests (1) to (10) are carried out in the same manner as in Example 1 using sealing materials under firing conditions as shown in Table 1. The results are shown in Table 1. The sealing materials used in Comparative Examples 1 to 5 are as followed.
Epoxy resin: STRUCTBOND EH-454 (manufactured by Mitsui Chemicals, Inc.)
Frit glass: PbO-B₂O₃-ZnO-SiO₂ type crystalline low melting solder glass
Polyamic acid (3): LARK-TPI (manufactured by Mitsui Chemicals, Inc.)
Polybenzimidazole: PBI MR Solution (manufactured by HOECHST INDUSTRY K.K)
Polyimide (4) : Preparation Example 4.

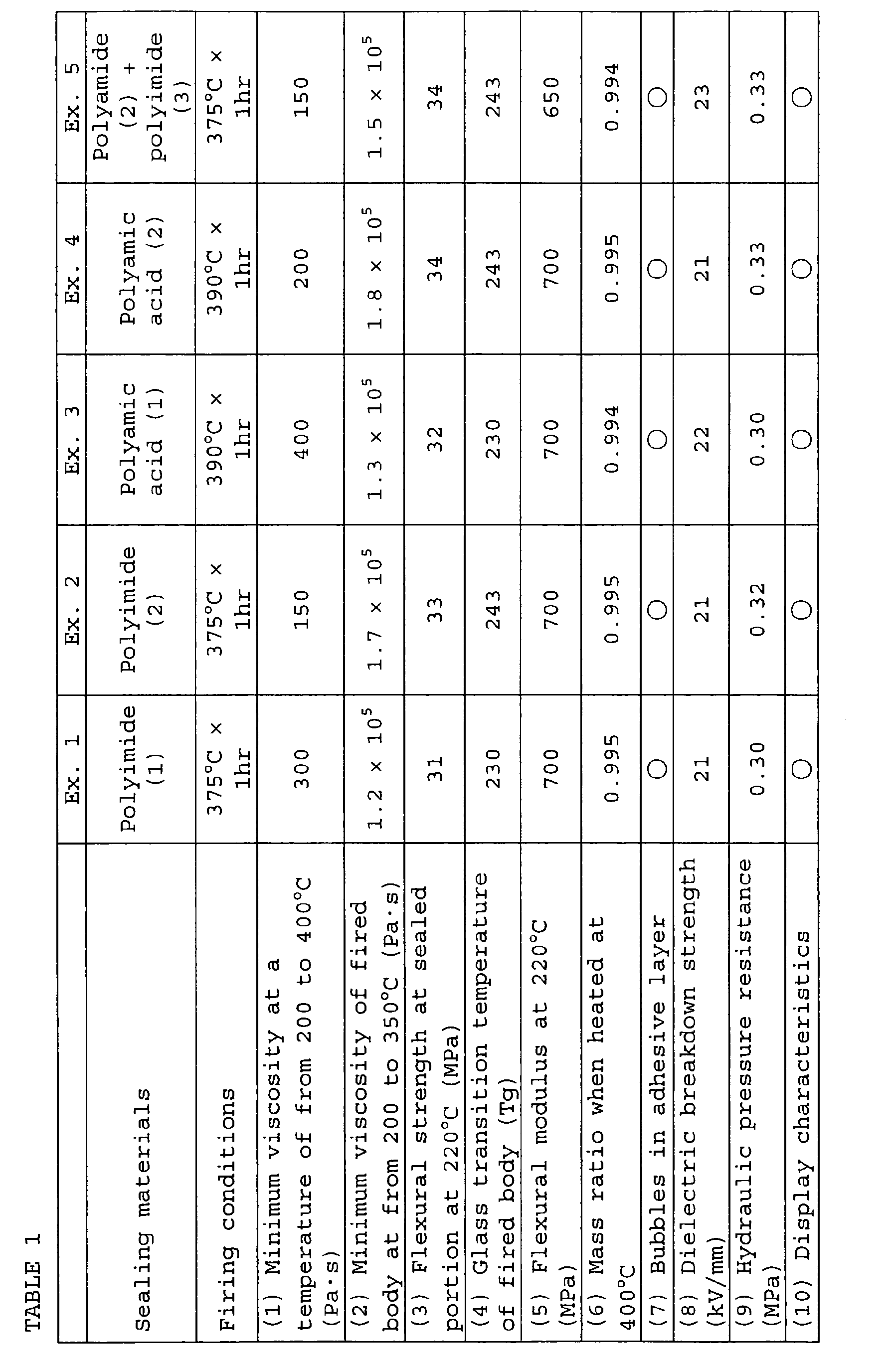

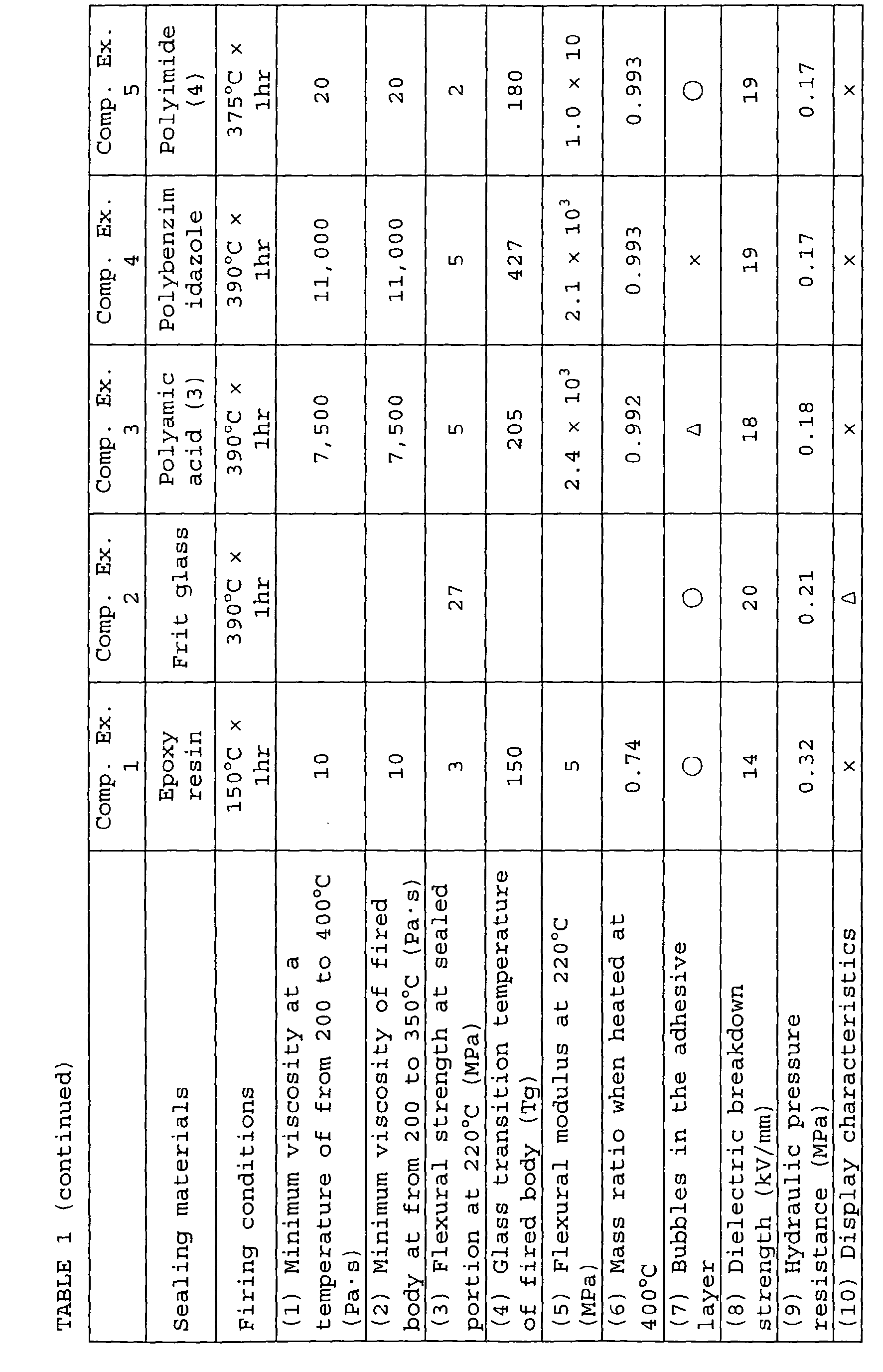

As evident from Table 1, the fired body of the organic hermetic sealing material in each of Examples has a minimum viscosity of at least 10⁵ Pa·s within a temperature range of from 200 to 350°C, and accordingly the sealed portion has a flexural strength of 30 MPa at 220°C and the fired body of the hermetic sealing material has a flexural modulus of at least 300 MPa at 220°C. As the sealed portion is excellent in strength in such a high temperature environment, the problem of breakage of the sealed portion will not arise in a process of exhausting the envelope at a high temperature, and a CRT employing such an envelope is excellent in display characteristics. Further, an envelope for a CRT sealed with the organic hermetic sealing material in each of Examples is excellent also in hydraulic pressure resistance.

Further, since the organic hermetic sealing material in each of Examples before firing has a minimum viscosity of at most 10³ Pa·s within a temperature range of from 200 to 400°C, no formation of bubbles in the adhesive layer is conformed.

Whereas, in Comparative Example 2 wherein sealing is carried out by using a conventional lead type frit glass at a temperature less than 400°C, not only the hermetic sealing material containing lead is problematic, but also the flexural strength at the sealed portion at 220°C is low, whereby the problem of breakage may arise in the high temperature exhaust process. Further, an envelope for a CRT sealed with the lead type frit glass in Comparative Example 2 has remarkably low hydraulic presser resistance and is not practical. In general, the hydraulic pressure resistance of an envelope is required to be at least 0.25 MPa, and is preferably at least 0.3 MPa.

Further, in Comparative Examples 3 to 5 wherein organic hermetic sealing materials of which fired bodies have a minimum viscosity less than 10⁵ Pa·s within a temperature range of from 200 to 350°C are used, the flexural strength at the sealed portion at 220°C is less than 20 MPa, the flexural strength at the sealed portion is insufficient in a high temperature environment, and the problem of breakage of the sealed portion may arise in the process of exhausting the envelope at a high temperature. Further, an envelope for a CRT sealed with the organic hermetic sealing material in each of Comparative Examples 3 to 5 have remarkably low hydraulic pressure strength and is not practical. Further, the organic hermetic sealing materials in Comparative Examples 3 and 4 before firing have a minimum viscosity exceeding 10³ Pa·s at a temperature of from 200 to 400°C, and accordingly bubbles are confirmed in adhesive layers using them.

Further, in Comparative Example 1 wherein an epoxy resin is used as a sealing material, the mass ratio when heated at 400°C is very small, whereby it is confirmed that a large amount of the hermetic sealing material is decomposed at the time of the high temperature exhaust process.

Further, a CRT prepared by using the hermetic sealing material in each of Comparative Examples 1 to 5 has a problem in its display characteristics and is not practical.

### EXAMPLES 6 TO 9

### PREPARATION OF POLYIMIDE (6)

To a container equipped with a stiller, a reflux condenser and a nitrogen introduction tube, 39.47g (0.135 mol) of 1,3-bis(3-aminophenoxy)benzene, 44.13 g (0.15mol) of 3,4,3',4'-biphenyltetracarboxylic dianhydride, 7.09 g (0.03 mol) of aminopropyltriethoxysilane, 5.96 g (0.024 mol) of 2-phenylethynylphenyldicarboxylic dianhydride and 275 g of m-cresol are put, followed by stirring at room temperature for 20 hours. Then, the reaction mixture is reacted at 200°C for 3 hours and cooled to room temperature. 550 g of methanol is added, followed by filtration to obtain a polyimide (6-1).

Similarly, to a container equipped with a stirrer, a reflux condenser and a nitrogen introduction tube, 43.85 g (0.15 mol) of 1,3-bis(3-aminophenoxy)benzene, 39.72 g (0.135 mol) of 3,4,3',4'- biphenyltetracarboxylic dianhydride, 7.44g (0.03 mol) of 4-phenylethynylphthalic anhydride and 275 g of m-cresol are put, followed by stirring at room temperature for 20 hours. Then, the mixture is reacted at 200°C for 3 hours and cooled to room temperature. 550 g of methanol is added, followed by filtration to obtain a polyimide (6-2).

5 parts by mass of the polyimide (6-1) and 95 parts by mass of the polyimide (6-2) are mixed to obtain a polyimide (1).

### PREPARATION OF POLYIMIDE (7)

To a container equipped with a stirrer, a reflux condenser and a nitrogen introduction tube, 35.08 g (0.12 mol) of 1,3'-bis(3-aminophenoxy)benzene, 6.37 g (0.03 mol) of 3,3-diaminobenzophenone, 39.72 g (0.135 mol) of 3,4,3',4'-biphenyltetracarboxylic dianhydride, 7.44 g (0.03 mol) of 4-phenylethynylphthalic anhydride and 275 g of m-cresol are put, followed by stirring at room temperature for 20 hours. Then, the mixture is reacted at 200°C for 3 hours and cooled to room temperature. 550g of methanol is added, followed by filtration to obtain a polyimide (7).

### EXAMPLE 6

A methanol solution containing 3 mass% of tetramethoxysilane (hereinafter referred to simply as TMOS) preliminarily hydrolyzed by diluted nitric acid was applied. The applied surface was dried at 25°C for 5 minutes. A hermetic sealing material solution containing the above polyimide (1) in cresol at a concentration of 15 mass% was applied thereto. The applied portion was pre-fired at a temperature of at least 200 and less than 250°C.

Such sealing end surfaces were overlaid and fired under conditions shown in Table 3. The following tests were carried out with respect to the sealed portion of the obtained envelope.
(1) Flexural strength of the sealed portion
   The sealed portion was cut to prepare a sample with a width 5 mm and a length of 60 mm, and a four-point flexural strength test was carried out at 220°C by a method in accordance with JIS R1601. The result is shown in Table 1.
(2) Another sample cut out in the same manner as the above test (1) was left at rest in a constant temperature and constant temperature mass set at a temperature of 80°C in a humidity of 85% for 7 days and then taken out, and subjected to the four-point flexural strength test at 220°C in the same manner as above. The rate of change was calculated in accordance with the following Formula from the flexural strengths obtained before and after the still standing.
   The ratio of flexural strength after the still standing (%)=(flexural strength after the sill standing) × 100/(flexural strength before the still standing)
(3) Dielectric breakdown strength
   A glass piece (60 mm × 30 mm × 5 mm in thickness) cut out from a glass panel portion of the above envelope is disposed, a direct current voltage is applied to both ends of the sealed portion of the sample piece, and the pressure is increased, and the value obtained by dividing the voltage at breakage by the thickness of glass is shown in Table 3 as dielectric breakdown strength.
(4) Hydraulic pressure resistance
   A difference in pressure by water was continuously applied to the inside and outside of the sealed envelope, and the difference in pressure when the envelope was broken was measured. When the envelope was broken at the sealed portion, the value is regarded as the hydraulic pressure resistance, and the result is shown in Table 3.
(5) Display characteristics

Image display characteristics were visually evaluated with respect to the sealed envelope. The result is shown in Table 3. Symbols shown in Table 3 have the same meanings in Example 1.

### EXAMPLES 7 and 8

The same operation as in Example 6 was carried out except that an ethyl acetate solution containing 3 mass% of tetraisocyanatesilane (hereinafter referred to as TICS) was used instead of TMOS and that the firing conditions were changed, and the same tests were carried out with respect to the sealed product. The results are shown in Table 3.

In Example 8, the same operation as in Example 6 was carried out except that the polyimide (2) was used instead of the polyimide (1) and that the firing conditions were changed, and the same tests were carried out with respect to the sealed product. The results are shown in Table 3.

### EXAMPLE 9

0.3 part by mass of TICS was mixed with 100 parts by mass of the hermetic sealing material solution containing the above polyimide (1) in cresol at a concentration of 15 mass% to obtain a sealing composition. This composition was applied to an end surface of a sealed portion, followed by pre-firing at from 200 to 250°C.

Then, the same operation as in Example 6 was carried out, and the same tests were carried out with respect to the sealed product. The results are shown in Table 3.

**TABLE 3**

| | Ex. 6 | Ex. 7 | Ex. 8 | Ex. 9 |
|---|---|---|---|---|
| Hermetic sealing material | Polyimide (1) | Polyimide (1) | Polyimide (2) | Polyimide (1) |
| Characteristics of polyimide structure | containing -Si-(OC₂H₅)₃ | containing -Si-(OC₂H₅)₃ | - | containing -Si(OC₂H₅)₃ |
| Firing conditions | 375°C × 1hr | 350°C × 2hr | 350°C × 2hr | 350°C × 2hr |
| Primer | TMOS | TICS | TMOS | TICS (2 mass%) |
| Strength before still standing (MPa) | 43 | 43 | 37 | 43 |
| Strength after still standing (MPa) | 41 | 43 | 38 | 39 |
| Ratio of flexural strength after still standing (%) | 95 | 100 | 103 | 93 |
| Flexural strength at sealed portion at 220°C (MPa) | 33 | 32 | 34 | 33 |
| Dielectric breakdown strength (kV/mm) | 21 | 22 | 21 | 22 |
| Hydraulic pressure resistance (MPa) | 0.32 | 0.30 | 0.33 | 0.31 |
| Display characteristics after long time | ○ | ○ | ○ | ○ |

### EXAMPLES 10 to 13

The same operation as in Example 6 was carried out with respect to Examples 6 and 8 wherein no primer layer was formed (Examples 10, 11 and 13, respectively). The results are shown in Table 2.

The epoxysilane used in Example 12 was a methanol solution containing 3 mass% of 3-glycidoxypropyltrimethoxysilane preliminarily hydrolyzed by diluted nitric acid, and the aminosilane used in Example 13 was an aqueous solution containing 3 mass% of 3-aminopropyltrimehoxysilane.

**TABLE 4**

| | Ex. 10 | Ex. 11 | Ex. 12 | Ex. 13 |
|---|---|---|---|---|
| Hermetic sealing material | Polyimide (1) | Polyimide (2) | Polyimide (1) | Polyimide (1) |
| Characteristics of polyimide structure | containing -Si- (OC₂H₅)₃ | - | containing -Si- (OC₂H₅)₃ | containing -Si- (OC₂H₅)₃ |
| Firing conditions | 375°C 1hr | 350°C × 2hr | 350°C × 2hr | 350°C × 2hr |
| Primer | Nil | Nil | Epoxysilane | Aminosilane |
| Strength before still standing (MPa) | 43 | 36 | 41 | 41 |
| Strength after still standing (MPa) | 21 | 16 | 21 | 22 |
| Ratio of flexural strength after still standing (%) | 49 | 44 | 47 | 53 |
| Flexural strength at sealed portion at 220°C (MPa) | 40 | 40 | 39 | 39 |
| Dielectric breakdown strength (kV/mm) | 20 | 20 | 18 | 18 |
| Hydraulic pressure resistance (MPa) | 0.3 | 0.3 | 0.3 | 0.3 |
| Display characteristics after long time | × | × | × | × |

As evident from Table 3, in Examples 6 to 9 of the present invention, the flexural strength at a sealed portion at 220°C is at least 30 MPa, and excellent strength of the sealed portion at high temperature is achieved. Further, in a high temperature high humidity test, the rate of change of the flexural strength is at least 90%, and particularly in Examples 7 and 8, it exceeds 100%. Further, dielectric breakdown strength is at least 20%, the hydraulic pressure resistance is at least 21%, and the display characteristics after about 1000 hours are acceptable in these Examples.

Whereas in Examples 10 and 11 wherein no primer layer was formed, although the flexural strength at a sealed portion at 220°C was 40 MPa, but the dielectric breakdown strength was 20 kV/mm, the hydraulic pressure strength was 0.3 MPa, and the display characteristics after about 1000 hours were very poor.

Further, in Examples 12 and 13 wherein a primer layer made of a compound not defined by the present invention was used, although the flexural strength at a sealed portion at 220°C is 39 MPa, in a high temperature high humidity test, the rate of change of the flexural strength is abut 50% and is very low as compared with Examples 6 to 9. Further, the dielectric breakdown strength is 18 kV, the hydraulic pressure resistance is 0.3 MPa, the display characteristics after long time are very poor.

### INDUSTRIAL APPLICABILITY

The excellent envelope, hermetic sealing material and sealing method of the present invention, with which sealing is possible at a temperature less than 400°C, sufficient strength is achieved in a high temperature environment, and characteristics will not decrease under high humidity conditions including a high temperature and high humidity atmosphere, are widely useful for image display devices such as CRT, FED and PDP.

## Claims

1. An envelope for an image display device, having envelope-constituting members including an image display portion made of glass, sealed with a hermetic sealing material layer, **characterized in that** the hermetic sealing material layer comprises an organic hermetic sealing material layer obtained by firing an organic hermetic sealing material, and a fired body of the organic hermetic sealing material has a viscosity of at least 10⁵ Pa·s within a range of from 200 to 350°C.

2. The envelope for an image display device according to Claim 1, wherein a sealed portion comprising the organic hermetic sealing material layer and the envelope-constituting members sealed with the organic hermetic sealing material layer, has a flexural strength of at least 30 MPa at 220°C.

3. The envelope for an image display device according to Claim 1 or 2, wherein the fired body of the organic hermetic sealing material has a glass transition temperature (Tg) of at least 200°C as measured by a differential scanning calorimeter.

4. The envelope for an image display device according to any one of Claims 1 to 3, wherein the fired body of the organic hermetic sealing material has a flexural modulus of at least 300 MPa at 220°C.

5. The envelope for an image display device according to any one of Claims 1 to 4, wherein the fired body of the organic hermetic sealing material satisfies 0.99<m₄₀₀/m₂₀≦1.00, where m₂₀ is the mass at 20°C, and m₄₀₀ is the mass at 400°C.

6. The envelope for an image display device according to any one of Claims 1 to 5, wherein the main component of the organic hermetic sealing material is a polyimide compound or a polyamic acid compound.

7. An envelope for an image display device, **characterized in that** a sealed portion of envelope-constituting members including an image display portion made of glass is sealed with a hermetic sealing material layer containing a polyimide compound and/or a polyamic acid compound as the main component, and the flexural strength after the sealed portion is left at rest in a constant temperature and constant humidity atmosphere at a temperature of 80°C in a humidity of 85% for 7 days, is at least 90% of the flexural strength before the still standing.

8. The envelope for an image display device according to Claim 7, **characterized in that** the sealed portion is sealed with a primer layer containing a fired body of an organic metal compound and/or its hydrolysate, on at least one side of the hermetic sealing material layer.

9. The envelope for an image display device according to Claim 8, wherein the organic metal compound is a compound represented by the following Formula (A):
R²ₙMR¹₍₄₋ₙ₎ (A)
(in the Formula, M is at least one element selected from the group consisting of Si, Ti and Zr, R¹ is a hydrolysable group, R² is a C₁₋₄ alkyl group or a phenyl group, and n is an integer of from 0 to 2).

10. The envelope for an image display device according to any one of Claims 7 to 9, wherein the hermetic sealing material layer is a layer containing, as the main component, a hydrolysate of a polyimide compound and/or a polyamic acid compound containing a structure represented by the following Formula (B):
-Si-(OR⁴)₃₋ᵣR⁵ᵣ (B)
(in the Formula, R⁴ is a C₁₋₃ alkyl group, R⁵ is a C₁₋₃ alkyl group or a phenyl group, and r is 0 to 2).

11. The envelope for an image display device according to any one of Claims 7 to 10, wherein the envelope is a vacuum envelope.

12. A hermetic sealing material for an image display device, which is an organic hermetic sealing material to seal envelope-constituting members to constitute an envelope for an image display device, **characterized in that** a fired body thereof has a viscosity of at least 10⁵ Pa·s within a range of from 200 to 350°C.

13. The hermetic sealing material for an image display device according to Claim 12, wherein the minimum viscosity before firing is at most 10³ Pa·s within a range of from 200 to 400°C.

14. The hermetic sealing material for an image display device according to Claim 12 or 13, wherein the fired body has a glass transition temperature (Tg) of at least 200°C as measured by a differential scanning calorimeter.

15. The hermetic sealing material for an image display device according to any one of Claims 12 to 14, wherein the fired body has a flexural modulus of at least 300 MPa at 220°C.

16. The hermetic sealing material for an image display device according to any one of Claims 12 to 15, wherein 0.99<m₄₀₀/m₂₀≦1.00, where m₂₀ is the mass of the fired body at 20°C, and m₄₀₀ is the mass of the fired body at 400°C.

17. The hermetic sealing material for an image display device according to any one of Claims 12 to 16, which contains, as the main component, a polyimide compound or a polyamic acid compound.

18. The hermetic sealing material for an image display device according to Claim 17, **characterized by** containing, as the main component, at least one of polyimide compounds having structures represented by the following Formulae 1 to 3: 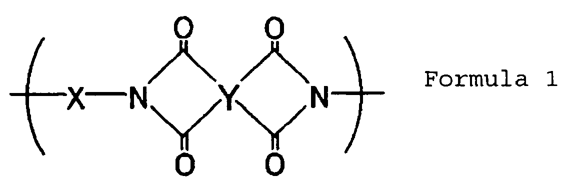 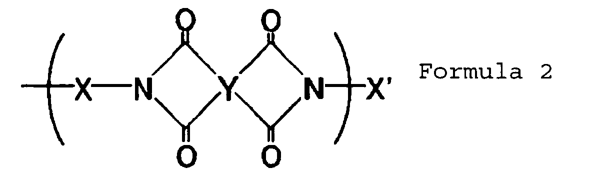 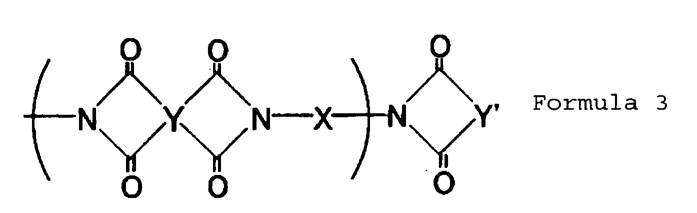 (in the Formulae, X is the main skeleton of a diamine compound, X' is the main skeleton of a monoamine compound, Y is the main skeleton of a tetracarboxylic dianhydride, and Y' is the main skeleton of a dicarboxylic anhydride).

19. The hermetic sealing material for an image display device according to Claim 18, **characterized in that** in the polyimide compounds of the Formulae 1 to 3, when X is any one selected from the group consisting of the following Formulae 4 to 8, Y is any one selected from the group consisting of the following Formulae 9 to 14; when X is the following Formula 15, Y is the following Formula 16 or 17; and when X is the following Formula 18, Y is the following Formula 19: 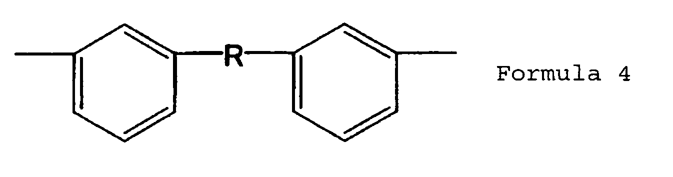 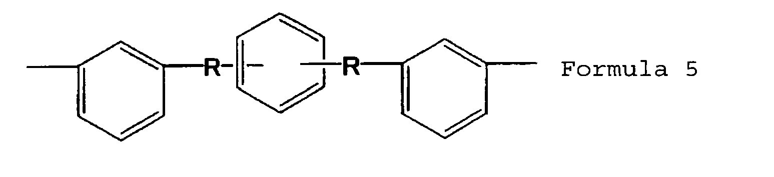 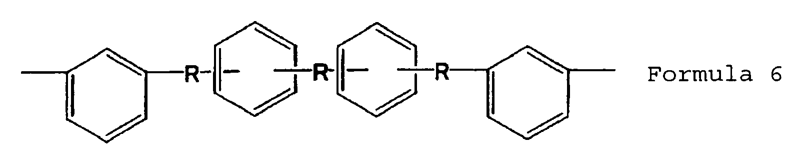 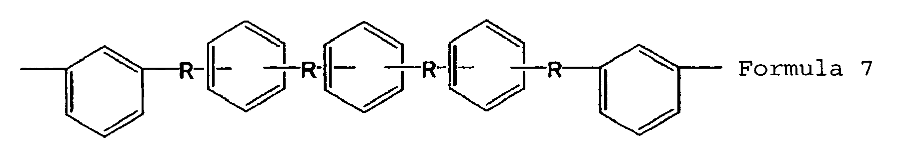 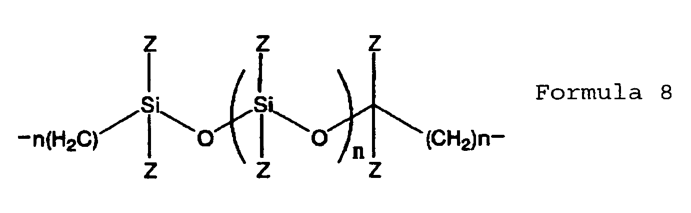 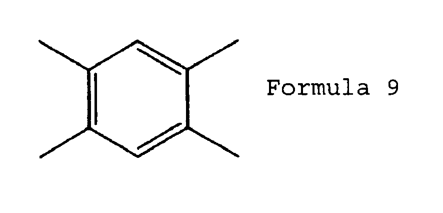 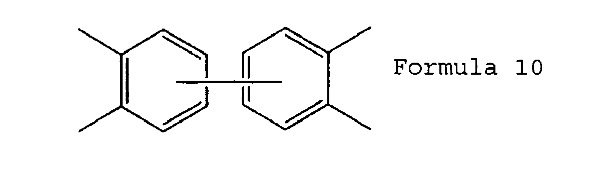 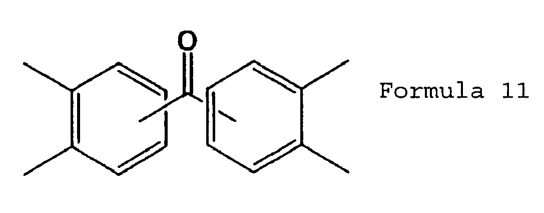 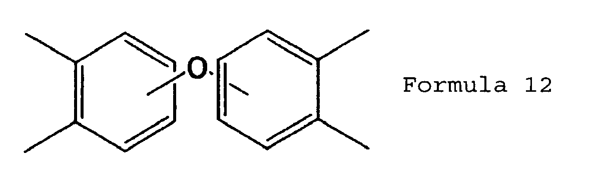 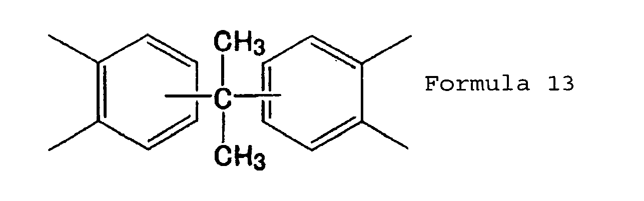 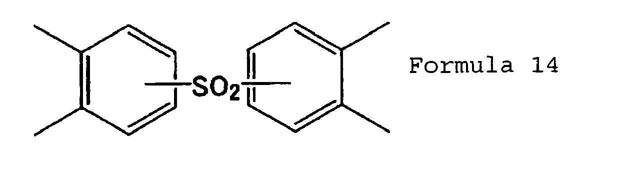 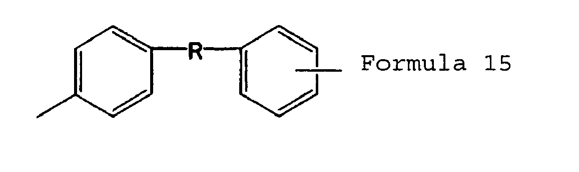 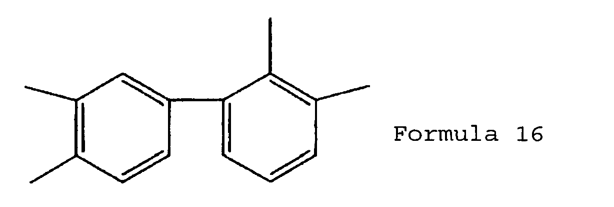 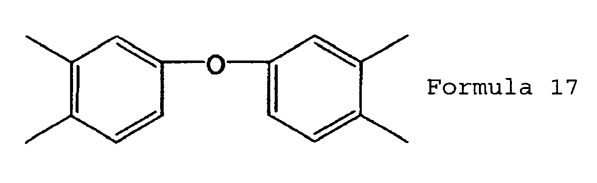 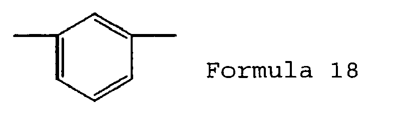 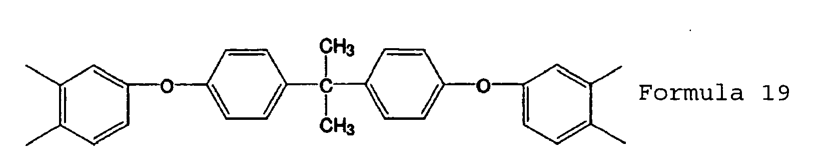 (in the above Formulae, R each independently is any one selected from the group consisting of -, -O-, -CO-, -SO₂-, -S-, -CH₂- and C(CH₃)₂, n each independently is from 0 to 7, and Z each independently is CH₃ or a phenyl group) .

20. The hermetic sealing material for an image display device according to Claim 18 or 19, wherein in the polyimide compound of the Formula 2, X' is the following Formula 20 or 21:
- (R1)ₙ-Si-(OR2)₃₋ᵣR3ᵣ Formula 20 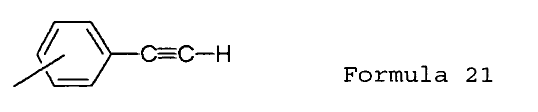 (in the Formula 20, R1 each independently is CH₂ or a phenyl group, R2 and R3 each independently are CH₃ or C₂H₅, n is an integer of from 1 to 7, and r is an integer of from 0 to 2).

21. The hermetic sealing material for an image display device according to Claim 18 or 19, wherein in the polyimide compound of the Formula 3, Y' is any one selected from the group consisting of the following Formulae 22 to 26:

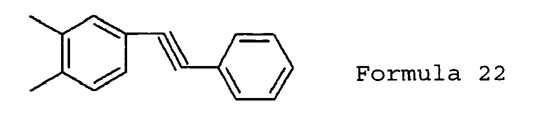

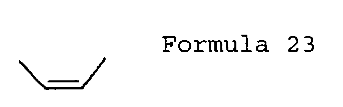

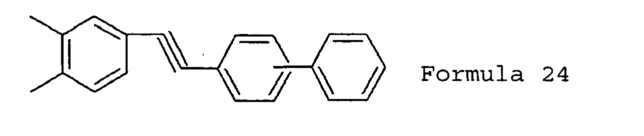

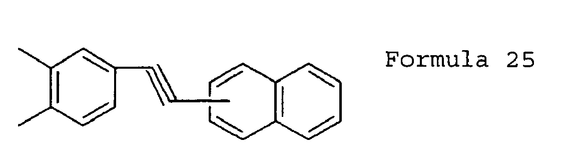

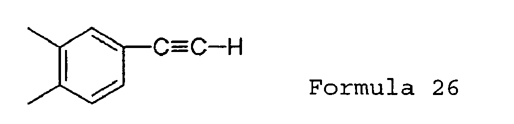

22. The hermetic sealing material for an image display device according to any one of Claims 18 to 21, **characterized in that** the polyimide compounds of the Formulae 1 to 3 further have at least one crosslinkable group selected from the group consisting of a vinylene group, an ethynyl group, a vinylidene group, a benzocyclobutan-4'-yl group, an isocyanate group, an allyl group, an oxirane group, an oxetane group, a cyano group and an isopropenyl group.

23. The hermetic sealing material for an image display device according to Claim 17, **characterized by** containing, as the main component, at least one of polyamic acid compounds having structures represented by the following Formulae 27 to 29: 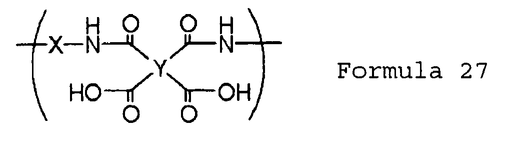 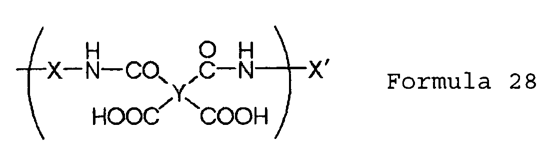 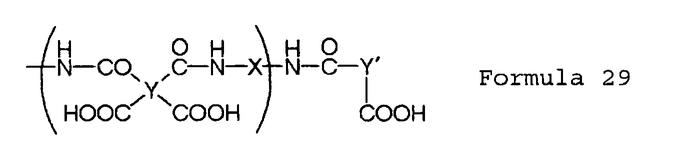 (in the Formulae, X is the main skeleton of a diamine compound, X' is the main skeleton of a monoamine compound, Y is the main skeleton of a tetracarboxylic dianhydride, and Y' is the main skeleton of a dicarboxylic anhydride).

24. The hermetic sealing material for an image display device according to Claim 23, wherein in the polyamic acid compounds of the Formulae 27, 28 and 29, when X is any one selected from the group consisting of the following Formulae 4 to 8, Y is any one selected from the group consisting of the following Formulae 9 to 14; when X is the following Formula 15, Y is the following Formula 16 or 17; and when X is the following Formula 18, Y is the following Formula 19: 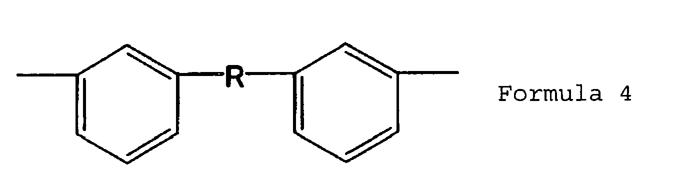 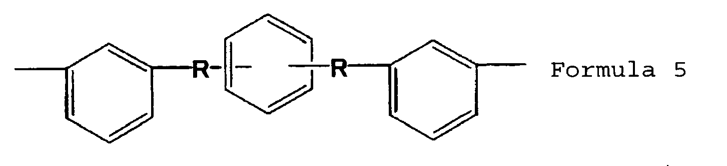 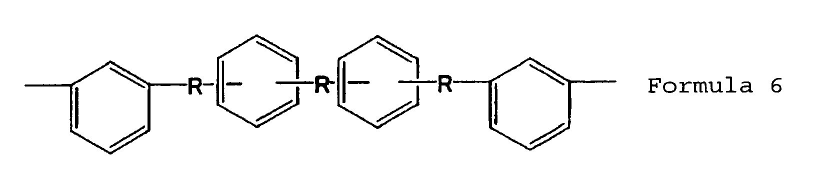 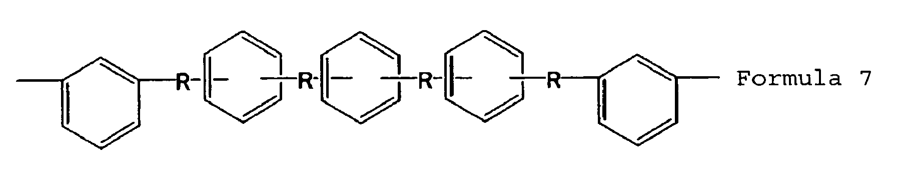 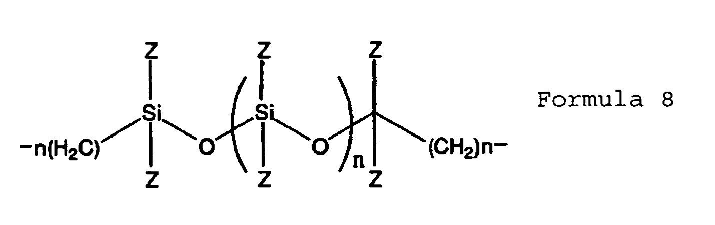 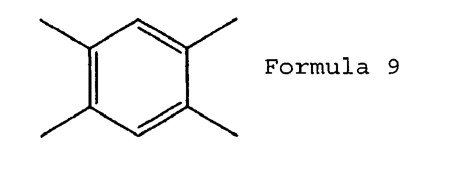 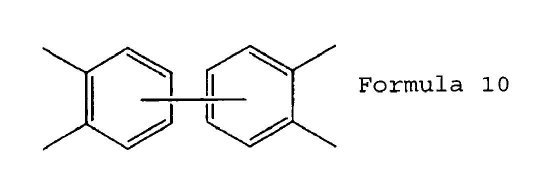 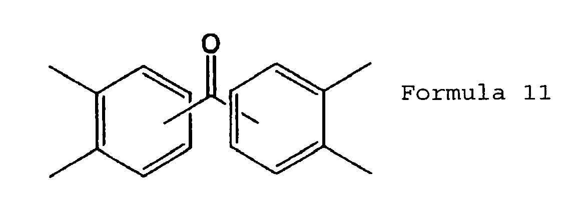 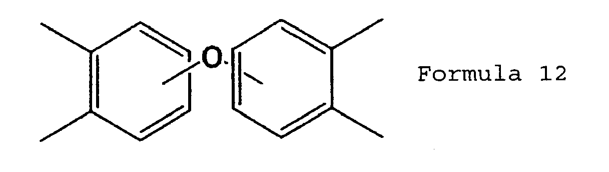 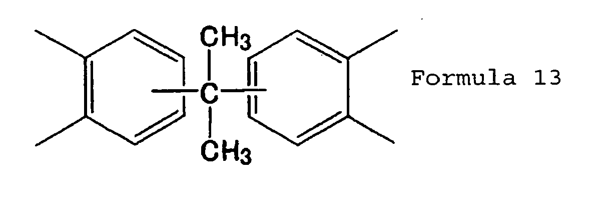 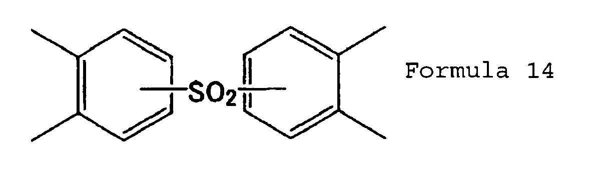 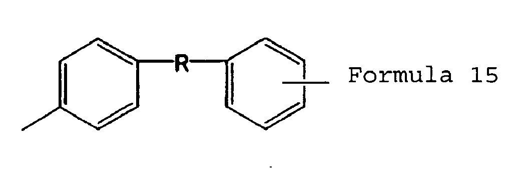 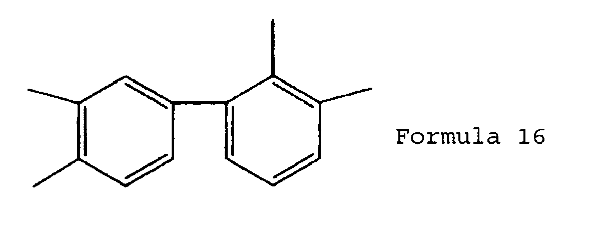 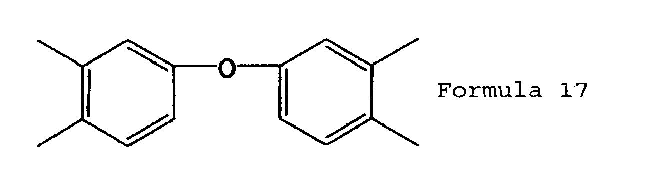 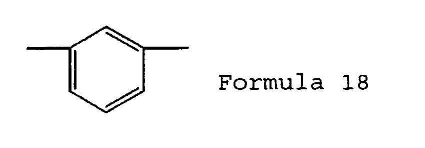 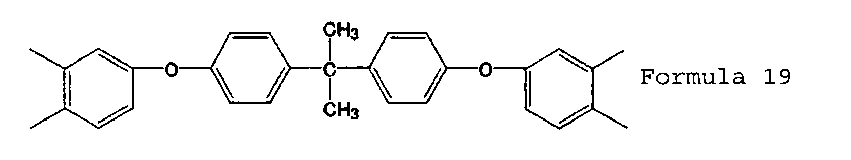 (in the above Formulae, R each independently is any one selected from the group consisting of -, -O-, -CO-, -SO₂-, -S-, -CH₂- and C(CH₃)₂, n each independently is from 0 to 7, and Z each independently is CH₃ or a phenyl group).

25. The hermetic sealing material for an image display device according to Claim 23 or 24, wherein in the polyamic acid compound of the Formula 28, X' is the following Formula 20 or 21:
- (R1)ₙ-Si- (OR2)₃₋ᵣR3ᵣ Formula 20 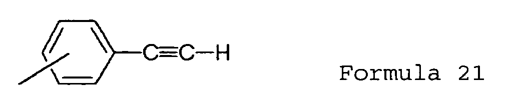
(wherein R1 each independently is CH₂ or a phenyl group, R2 and R3 each independently are CH₃ or C₂H₅, n is an integer of from 1 to 7, and r is an integer of from 0 to 2) .

26. The hermetic sealing material for an image display device according to Claim 23 or 24, wherein in the polyamic acid compound of the Formula 29, Y' is any one selected from the group consisting of the following Formulae 22 to 26:

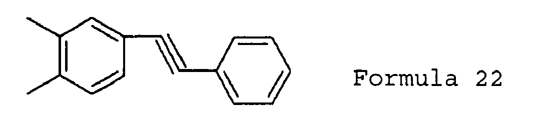

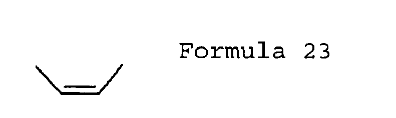

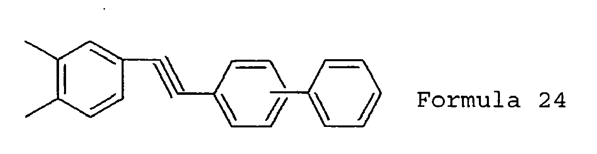

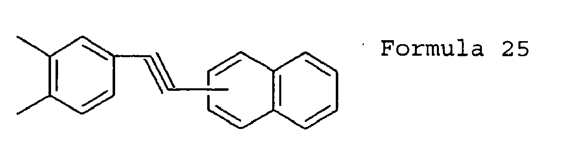

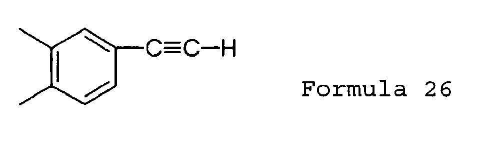

27. The hermetic sealing material for an image display device according to any one of Claims 23 to 26, **characterized in that** the polyamic acid compounds of the Formulae 27 to 29 further have at least one crosslinkable group selected from the group consisting of a vinylene group, an ethynyl group, a vinylidene group, a benzocyclobutan-4'-yl group, an isocyanate group, an allyl group, an oxirane group, an oxetane group, a cyano group and an isopropenyl group.

28. An envelope for an image display device, **characterized in that** envelope-constituting members are sealed with the hermetic sealing material for an image display device as defined in any one of Claims 18 to 27.

29. An image display device provided with the envelope for an image display device as defined in Claim 28.

30. A method for sealing an envelope for an image display device, **characterized by** applying a primer layer-forming material containing an organic metal compound represented by the following Formula (A) and/or its hydrolysate to sealing surfaces of envelope-constituting members, then applying a hermetic sealing material containing a polyimide compound and/or a polyamic acid compound as the main component, or its solution, followed by heating at a temperature of from 250 to 400°C, to solidify the primer layer-forming material and the hermetic sealing material layer-forming material thereby to seal the envelope-constituting members:
R²ₙMR¹₍₄₋ₙ₎ (A)
(in the Formula, M is at least one element selected from the group consisting of Si, Ti and Zr, R¹ is a hydrolysable group, R² is a C₁₋₄ alkyl group or a phenyl group, and n is an integer of from 0 to 2).

31. The method for sealing an envelope for an image display device according to Claim 30, wherein the hermetic sealing material layer containing a hydrolysate of a polyimide compound and/or a polyamic acid compound as the main component, contains a structure represented by the following Formula (B):
-Si-(OR⁴)₃₋ᵣR⁵ᵣ (B)
(in the Formula, R4 is a C1-3 alkyl group, R5 is a C1-3 alkyl group or a phenyl group, and r is from 0 to 2).
